# EUROPEAN PATENT APPLICATION

(11) **EP 4 822 230 A1**
(43) Date of publication of application: **14.10.2026**
(21) Application number: 24900183.5
(22) Date of filing: 10.06.2024
(51) Int. Cl.: F16L 15/04

(54) **THREADED CONNECTION**

(30) Priority: 06.12.2023 JP 2023205834
(71) Applicant: Nippon Steel Corporation, Tokyo 100-8071 (JP); Vallourec Oil and Gas France, 59620 Aulnoye-Aymeries (FR)
(72) Inventor: KURANISHI, Takao, Tokyo 100-8071 (JP); OSHIMA, Masahiro, Tokyo 100-8071 (JP); ABE, Tomoka, Tokyo 100-8071 (JP); SUGINO, Masaaki, Tokyo 100-8071 (JP)
(74) Representative: J A Kemp LLP
(86) International application number: PCT/JP2024/020966
(87) International publication number: WO 2025/120883

(57) **Abstract**

A threaded connection (100) includes a pin (10) and a box (20) and, in a made up state, sealing surfaces (12, 22) come into interference contact with each other, a male thread root (112) comes into interference contact with a female thread crest (212), and load flanks (114, 214) come into pressure contact with each other. In an individual state, in a case in which a surface of the box (20) is covered by an undercoating (25) that includes an alloy plating layer (251) and by a solid lubricating coating (26) in a single form, a coating thickness (tS214) of the solid lubricating coating (26) on the female thread load flank (214) is smaller than a coating thickness (tS212) of the solid lubricating coating (26) on the female thread crest (212), and a coating thickness (tS22) of the solid lubricating coating (26) on the box sealing surface (22) is larger than the coating thickness (tS214) of the solid lubricating coating (26) on the female thread load flank (214).

## Description

### TECHNICAL FIELD

The present disclosure relates to a threaded connection that connects steel pipes with each other.

### BACKGROUND ART

In oil wells, natural gas wells, and the like (hereinafter also collectively referred to as "oil well"), a large number of steel pipes referred to as oil country tubular goods are used to mine underground resources. These steel pipes are connected with each other with threaded connections.

The types of threaded connections for steel pipes are broadly classified into a coupling type and an integral type. In the case of the coupling type, steel pipes are connected with each other via couplings, which are parts having a pipe shape separately from the steel pipes. Specifically, each steel pipe includes male thread parts at both end portions thereof, and each coupling includes female thread parts at both end portions thereof. The male thread part of the steel pipe is screwed into and made up to each female thread part of the coupling, so that steel pipes are connected with each other. In contrast, in the case of the integral type, steel pipes are directly connected with each other. Specifically, each steel pipe includes a male thread part at one end portion thereof, and includes a female thread part at the other end portion thereof. The male thread part of one steel pipe is screwed into and made up to the female thread part of the other steel pipe, so that the steel pipes are connected with each other. In general, the end portion of a steel pipe that includes a male thread part is referred to as "pin", and the end portion of a steel pipe or a coupling that includes a female thread part is referred to as "box". Making a description with these terms, a pin is made up to a box by inserting and screwing the pin into the box.

A threaded connection for a steel pipe is required to prevent galling in the course of making up and to ensure sealing performance after the made up and during use. Due to such requirements, in general, a grease is applied to the surface of a box and/or pin on an oil well site (platform) before a making up operation is executed. This grease is a lubricant specialized for threaded connections, and is referred to as "dope". Conventionally, the grease contains a heavy metal powder (compound). Standard compound greases are specified in the American Petroleum Institute (API) standard Recommended Practice 5A3, for example.

During execution of making up, a torque is generated with screwing of the pin into the box, and such a torque is controlled. In recent years, a method has been widely adopted in which a torque chart is monitored to determine soundness of making up based on the shape of the chart. The torque chart is a diagram in which the number of screwing turns is shown on the horizontal axis and torque is shown on the vertical axis. In short, the torque chart shows the behavior of the torque with respect to the number of screwing turns.

Usually, a threaded connection for a steel pipe has a torque stop mechanism. For example, in the case in which the kind of thread forming a thread part (a male thread part and a female thread part) is a buttress thread (trapezoidal-shaped thread) or a square thread, each of a pin and a box includes a shoulder surface as a torque stop mechanism. The shoulder surfaces come into contact with each other, so that the torque stop mechanism functions. In this specification, this torque stop mechanism is also referred to as "shouldering mechanism". In the case in which the kind of thread is a wedge-shaped thread, the load flank and the stabbing flank of a male thread part and the load flank and the stabbing flank of a female thread part are used as the torque stop mechanism. The load flanks come into contact with each other, and the stabbing flanks come into contact with each other, so that the torque stop mechanism functions. In this specification, this torque stop mechanism is also referred to as "self-locking mechanism".

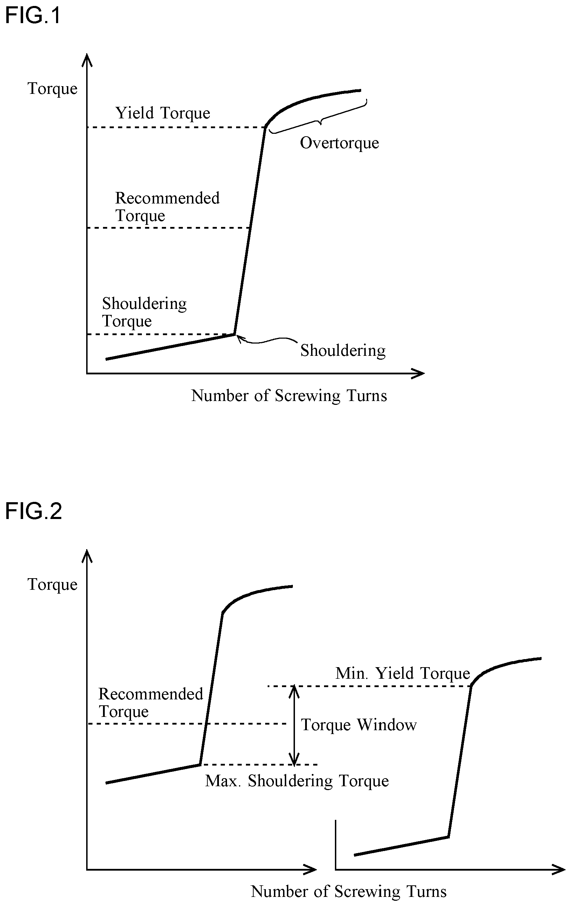

FIG. 1 shows one example of the torque chart. Referring to FIG. 1, the torque rises corresponding to the number of screwing turns. Specifically, after screwing is started, first, the contact surfaces of the pin and the box in the radial direction (a female thread crest and a male thread root, and sealing surfaces) come into contact with each other and start to interfere with each other. Consequently, in the initial stage of the screwing, the torque chart has a gentle gradient, that is, a torque gradually rises. In the case of a threaded connection having a shouldering mechanism, the torque chart significantly changes at the point in time at which the shouldering mechanism functions due to advancing of the screwing. This point of change is referred to as "shouldering", and the torque at this point of change is referred to as "shouldering torque". The torque chart following the shouldering has a steep gradient, that is, the torque steeply rises. With further advancing of the screwing, the torque chart changes from the steep gradient to a gentle gradient. The torque at this point of change is referred to as "yield torque", and the torque following this point of change is referred to as "overtorque". An overtorque state is a state in which excessive screwing is executed. In the overtorque state, in most cases, thread parts or shoulder surfaces are significantly plastically deformed to the extent that they are no longer usable again.

Also in the case of a threaded connection having a self-locking mechanism, the torque chart of such a threaded connection is substantially equal to the torque chart of the threaded connection having a shouldering mechanism. In this case, the torque chart significantly changes at the point in time at which the self-locking mechanism functions. This point of change is referred to as "self-locking", and the torque at this point of change is referred to as "locking torque". Self-locking corresponds to shouldering, and a locking torque corresponds to a shouldering torque.

In making up the threaded connection, when screwing is completed at a torque between the shouldering torque (locking torque) and the yield torque, desired connection strength and sealing performance can be obtained. Therefore, the recommended torque at which screwing should be completed is set to a torque within such a range. The recommended torque is set such that the torque at the point of completion of screwing falls between the shouldering torque and the yield torque even if dimensions change within the range of production tolerance.

FIG. 2 is a diagram for describing a recommended torque. FIG. 2 shows, side by side, a torque chart that is assumed to have the maximum shouldering torque within the range of production tolerance (hereinafter also referred to as "high-side torque chart") and a torque chart that is assumed to have the minimum yield torque within the range of the production tolerance (hereinafter also referred to as "low-side torque chart"). In FIG. 2, the torque chart on the left is the high-side torque chart, and the torque chart on the right is the low-side torque chart. The range from a shouldering torque (Max. shouldering torque) in the high-side torque chart to a yield torque (Min. yield torque) in the low-side torque chart is referred to as "torque window". The recommended torque is set to a torque within the torque window.

However, depending on design of a threaded connection or the kind of lubricant, for example, there may be a case in which a shouldering torque in the high-side torque chart is higher than a yield torque in the low-side torque chart. In this case, an effective torque window is not present and hence, it is difficult to set the recommended torque. For this reason, in designing a threaded connection, an effort has been made to expand the torque window as much as possible by setting the shouldering torque (locking torque) to as low a value as possible and by setting the yield torque to as high a value as possible.

In recent years, in order to achieve improvements in the natural environment, operability on oil well sites, and the health of operators, for example, a technique that uses a lubricant instead of a conventionally-used dope, that is, a dope-free technique, has been promoted. In the dope-free technique, a polymer-based lubricating coating is formed on the surface of a box and/or pin. This lubricating coating is a solid or semi-solid lubricant that covers the box and/or pin, and is referred to as "solid lubricating coating". The solid lubricating coating is prepared by mixing various lubricants, an antislipping agent, a rust inhibitor, and the like, for example, and achieves various properties, such as preferred frictional properties, adhesiveness, and durability.

In a threaded connection that includes a solid lubricating coating, when the solid lubricating coating is prepared in such a way as to have a small friction coefficient in order to cause the threaded connection to have a low shouldering torque, the threaded connection spontaneously has a low yield torque. In contrast, when the solid lubricating coating is prepared in such a way as to have a large friction coefficient in order to cause the threaded connection to have a high yield torque, the threaded connection spontaneously has a high shouldering torque. In short, adjusting only the friction coefficient of the solid lubricating coating does not expand the torque window.

Further, when the solid lubricating coating has an excessively small friction coefficient, the threaded connection in the made up state is likely to be loosened and hence, the problem of so-called low breakout torque occurs. In contrast, when the solid lubricating coating has an excessively large friction coefficient, the torque required for screwing exceeds the rated torque of the fastening device, so that the making up operation becomes difficult. In addition to the above, the risk of causing galling in the course of making up increases.

National Publication of International Patent Application No. 2009-517614 (Patent Literature 1) and National Publication of International Patent Application No. 2015-506445 (Patent Literature 2), for example, propose techniques that can expand the torque window by solving such a problem.

A threaded connection described in Patent Literature 1 includes a first layer and a second layer, the first layer having a high frictional property and a property of preventing galling, the second layer having a low frictional property. The first layer is provided to the surface of either one of a pin or a box. The second layer is provided to the surface of either one of the pin or the box in a region that comes into contact with the surface of the other of the pin or the box in the radial direction. The region in which the second layer is provided includes the female thread crest of the box, the male thread root of the pin, and the sealing surfaces. The first layer and the second layer are solid lubricating coatings of different kinds. The technique described in Patent Literature 1 aims to achieve low shouldering torque and high yield torque by providing the first layer and the second layer.

A threaded connection described in Patent Literature 2 includes a first solid lubricating coating and a second solid lubricating coating. The first solid lubricating coating has higher Knoop hardness than the second solid lubricating coating. The first solid lubricating coating is provided to a portion of the contact surface of at least one of a pin or a box. The portion of the contact surface to which the first solid lubricating coating is provided includes a shoulder part, and further includes a sealing part. The second solid lubricating coating is provided to the contact surface of at least one of the pin or the box at least in a region to which the first solid lubricating coating is not provided. The region of the contact surface to which the second solid lubricating coating is provided includes at least a thread part. The technique described in Patent Literature 2 aims to achieve low shouldering torque and high yield torque by providing the first solid lubricating coating and the second solid lubricating coating.

### CITATION LIST

### PATENT LITERATURE

Patent Literature 1: National Publication of International Patent Application No. 2009-517614
Patent Literature 2: National Publication of International Patent Application No. 2015-506445

### SUMMARY OF INVENTION

### TECHNICAL PROBLEM

In each of the threaded connections described in Patent Literature 1 and Patent Literature 2, two kinds of solid lubricating coating are essential. For this reason, it is necessary to individually supply and strictly control the two kinds of solid lubricating coating. In addition to the above, the regions in which the two kinds of solid lubricating coating are provided are not the same between the pin and the box. For this reason, it is necessary to apply the two kinds of solid lubricating coating to the pin and the box differently according to the required regions. Accordingly, the solid lubricating coating has a complex configuration that expands the torque window, and the cost for achieving such a configuration tends to increase.

It is an objective of the present disclosure to provide a threaded connection that can expand the torque window with a simple and inexpensive configuration.

### SOLUTION TO PROBLEM

A threaded connection according to the present disclosure is a threaded connection that connects steel pipes with each other. The threaded connection includes a pin having a pipe shape and a box having a pipe shape. The pin is provided continuously to a steel pipe body. The box is made up to the pin with insertion of the pin into the box. The pin includes a male thread part and a pin sealing surface. The male thread part is provided to an outer peripheral surface of the pin. The pin sealing surface is provided to the outer peripheral surface of the pin. The box includes a female thread part and a box sealing surface. The female thread part is provided to an inner peripheral surface of the box in such a way as to correspond to the male thread part, and is engaged with the male thread part in a made up state in which the pin and the box are made up to each other. The box sealing surface is provided to the inner peripheral surface of the box in such a way as to correspond to the pin sealing surface. The male thread part includes a male thread crest, a male thread root, a male thread stabbing flank, and a male thread load flank. The female thread part includes a female thread root, a female thread crest, a female thread stabbing flank, and a female thread load flank. The female thread root corresponds to the male thread crest. The female thread crest corresponds to the male thread root. The female thread stabbing flank corresponds to the male thread stabbing flank. The female thread load flank corresponds to the male thread load flank.

In an individual state before the pin and the box are made up to each other, a surface of at least one of the box or the pin is covered by an undercoating, and the surface covered by the undercoating is covered by a solid lubricating coating in a single form. In the individual state, the undercoating includes an alloy plating layer, and the solid lubricating coating is formed on the alloy plating layer. In the made up state, the pin sealing surface comes into interference contact with the box sealing surface, the male thread root comes into interference contact with the female thread crest, and the male thread load flank comes into pressure contact with the female thread load flank.

The threaded connection in the individual state has a following configuration. A coating thickness of the solid lubricating coating on the female thread load flank in a pipe axis direction of the threaded connection is smaller than a coating thickness of the solid lubricating coating on the female thread crest in a radial direction perpendicular to the pipe axis direction. A coating thickness of the solid lubricating coating on the box sealing surface in the radial direction is larger than the above-mentioned coating thickness of the solid lubricating coating on the female thread load flank. A coating thickness of the solid lubricating coating on the male thread load flank in the pipe axis direction is smaller than a coating thickness of the solid lubricating coating on the male thread root in the radial direction. A coating thickness of the solid lubricating coating on the pin sealing surface in the radial direction is larger than the above-mentioned coating thickness of the solid lubricating coating on the male thread load flank. In addition to the above, regarding a first coating thickness that is a total coating thickness of the solid lubricating coating and the undercoating on the female thread root, a second coating thickness that is a total coating thickness of the solid lubricating coating and the undercoating on the male thread crest, a third coating thickness that is a total coating thickness of the solid lubricating coating and the undercoating on the female thread crest, and a fourth coating thickness that is a total coating thickness of the solid lubricating coating and the undercoating on the male thread root, a first index is smaller than a second index, the first index being expressed by a value obtained by subtracting a sum total of the third coating thickness and the fourth coating thickness from a sum total of the first coating thickness and the second coating thickness, the second index being expressed by a distance between the male thread crest and the female thread root in the made up state in a case that assumes that each of the box and the pin includes neither the undercoating nor the solid lubricating coating.

### ADVANTAGEOUS EFFECTS OF INVENTION

According to the threaded connection according to the present disclosure, it is possible to expand the torque window with a simple and inexpensive configuration.

### BRIEF DESCRIPTION OF DRAWINGS

[FIG. 1] FIG. 1 is a diagram showing one example of a torque chart.
[FIG. 2] FIG. 2 is a diagram for describing a recommended torque.
[FIG. 3] FIG. 3 is a diagram showing one example of a torque chart that appears in a case of a threaded connection that includes a solid lubricating coating.
[FIG. 4] FIG. 4 is a longitudinal cross-sectional view of a threaded connection according to a first embodiment.
[FIG. 5] FIG. 5 is a partially enlarged view of the threaded connection shown in FIG. 4.
[FIG. 6A] FIG. 6A is a longitudinal cross-sectional view showing a pin of the threaded connection shown in FIG. 5 in an individual state before made up.
[FIG. 6B] FIG. 6B is a longitudinal cross-sectional view showing a box of the threaded connection shown in FIG. 5 in an individual state before made up.
[FIG. 7] FIG. 7 is a schematic view showing near-surface portions of the pin and the box of the threaded connection according to the first embodiment in an individual state.
[FIG. 8] FIG. 8 is a longitudinal cross-sectional view showing the threaded connection shown in FIG. 5 in a made up state in the case that assumes that each of the pin and the box includes neither an undercoating nor a solid lubricating coating.
[FIG. 9] FIG. 9 is a schematic view showing near-surface portions of the pin and the box in an individual state to describe a modification 1 of the threaded connection according to the first embodiment.
[FIG. 10] FIG. 10 is a schematic view showing near-surface portions of the pin and the box in an individual state to describe a modification 3 of the threaded connection according to the first embodiment.
[FIG. 11] FIG. 11 is a schematic view showing near-surface portions of the pin and the box in an individual state to describe a modification 4 of the threaded connection according to the first embodiment.
[FIG. 12A] FIG. 12A is a longitudinal cross-sectional view showing a portion of a pin of a threaded connection according to a second embodiment in an individual state.
[FIG. 12B] FIG. 12B is a longitudinal cross-sectional view showing a portion of a box of the threaded connection according to the second embodiment in an individual state.
[FIG. 13] FIG. 13 is a schematic view showing near-surface portions of the pin and the box of the threaded connection according to the second embodiment in an individual state.
[FIG. 14A] FIG. 14A is a longitudinal cross-sectional view showing a portion of a pin of a threaded connection according to a third embodiment in an individual state.
[FIG. 14B] FIG. 14B is a longitudinal cross-sectional view showing a portion of a box of the threaded connection according to the third embodiment in an individual state.
[FIG. 15] FIG. 15 is a schematic view showing near-surface portions of the pin and the box of the threaded connection according to the third embodiment in an individual state.
[FIG. 16] FIG. 16 is a longitudinal cross-sectional view showing a portion of a threaded connection according to a fourth embodiment in a made up state.
[FIG. 17A] FIG. 17A is a longitudinal cross-sectional view showing a pin of the threaded connection shown in FIG. 16 in an individual state.
[FIG. 17B] FIG. 17B is a longitudinal cross-sectional view showing a box of the threaded connection shown in FIG. 16 in an individual state.

### DESCRIPTION OF EMBODIMENTS

To solve the above-mentioned problems, inventors of the present disclosure have investigated an influence of a solid lubricating coating on a torque chart in detail, and have conducted extensive studies. As a result, the following findings are obtained.

The friction coefficient of a solid lubricating coating is substantially equal to the friction coefficient of a dope. Nevertheless, in general, the yield torque of a threaded connection that includes a solid lubricating coating has a tendency to be lower than the yield torque of a threaded connection that uses a dope.

However, it has been proved that, in making up the threaded connection that includes the solid lubricating coating, even when screwing is performed over a torque judged to be the yield torque, no thread part or shoulder surface actually yields (does not significantly plastically deform). From such findings, the inventors of the present disclosure have found that a torque that is judged to be a yield torque merely shows only a change in gradient of the torque chart, and is not the true yield torque.

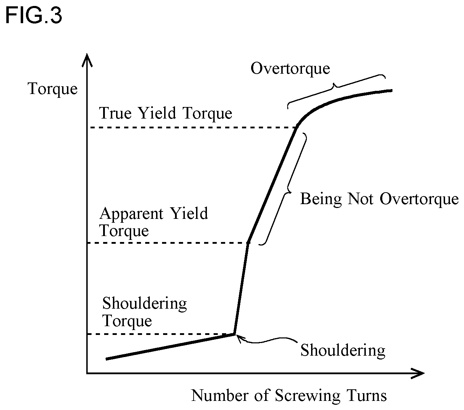

FIG. 3 shows one example of a torque chart that appears in a case of a threaded connection that includes a solid lubricating coating. Referring to FIG. 3, a torque chart having a steep gradient that follows shouldering (self-locking) curves at a torque lower than the true yield torque. That is, at the point at which the torque chart curves, the torque chart loses linearity, thus changing the gradient. In short, in the torque chart having a steep gradient that follows shouldering, a torque at loss of linearity appears before the true yield torque appears. The range from the torque at loss of linearity to the true yield torque is not the range for an overtorque state, but is a range within the torque window.

On oil well sites, operators determine soundness of making up only based on a change in gradient of the torque chart. For this reason, when a torque at loss of linearity is observed in the torque chart that follows the shouldering, even if the threaded connection does not actually yield, the torque at loss of linearity is taken as the yield torque for fastening control. Although this torque at loss of linearity is the apparent yield torque, when the apparent yield torque is observed, an operation of making up the threaded connection is paused. Then, the threaded connection is broken out and inspected and, thereafter, is made up again. In this manner, unnecessary labor is generated.

In view of the above, the inventors of the present disclosure have conducted studies on the cause of the appearance of an apparent yield torque in the torque chart despite no thread part or shoulder surface yielding in a threaded connection that includes a solid lubricating coating. As a result, the inventors of the present disclosure have found the following cause. After shouldering, load flanks slide along each other while coming into strong contact, thus generating a torque. The load flanks are contact surfaces in the pipe axis direction. In this case, when the solid lubricating coatings on the load flanks have a larger coating thickness, a lower apparent yield torque clearly appears in the torque chart. Further, shoulder surfaces are also contact surfaces in the pipe axis direction and, after shouldering, slide along each other while coming into strong contact, thus generating a torque. In this case, in the same manner as the load flanks, when the solid lubricating coatings on the shoulder surfaces have a larger coating thickness, a lower apparent yield torque clearly appears in the torque chart.

Specifically, regarding the contact surfaces in the pipe axis direction (the load flanks, the shoulder surfaces), in the case in which a surface that has the solid lubricating coating slides on the metal surface of the counterpart while pressing, when the pressing force is small the torque (force) required for sliding depends on the friction resistance between the free surface of the solid lubricating coating and the metal surface of the counterpart. When the pressing force increases, shear fracture occurs in the solid lubricating coating, thus reducing rigidity (shearing resistance) of the solid lubricating coating. When this occurs, the torque required for sliding is lowered by an amount corresponding to the reduction in rigidity of the solid lubricating coating. Such lowering appears as a change in gradient of the torque chart. When the solid lubricating coating has a larger coating thickness, shear fracture occurs in the solid lubricating coating more easily, thus causing a noticeable reduction in rigidity of the solid lubricating coating. Such a noticeable reduction in rigidity of the solid lubricating coating increases the amount of lowering of the torque required for sliding, so that the change in gradient of the torque chart appears clearly.

In short, in the threaded connection that includes the solid lubricating coating, the regions that are related to apparent yield torque are the contact surfaces in the pipe axis direction (the load flanks, the shoulder surfaces). The coating thicknesses of the solid lubricating coatings on the contact surfaces in the pipe axis direction are related to apparent yield torque.

In contrast, before shouldering, the contact surfaces in the radial direction come into contact with each other, and slide along each other while interfering. The contact surfaces in the radial direction are the female thread crest of the box and the male thread root of the pin, and the sealing surfaces. Sliding between these contact surfaces in the radial direction generates a torque before shouldering. Therefore, when the solid lubricating coatings on the contact surfaces in the radial direction have a large coating thickness, lubricity is increased and hence, friction resistance can be suppressed. As a result, a low shouldering torque is obtained.

In short, in the threaded connection that includes the solid lubricating coating, the regions that are related to shouldering torque are contact surfaces in the radial direction (the female thread crest and the male thread root, the sealing surfaces). The coating thicknesses of the solid lubricating coatings on the contact surfaces in the radial direction are related to shouldering torque.

Based on the above-mentioned findings, the inventors of the present disclosure have reached the following technical idea. When the solid lubricating coatings have a relatively large coating thickness on the contact surfaces in the radial direction that are related to shouldering torque (the female thread crest and the male thread root, the sealing surfaces), it is possible to ensure good lubricity. In contrast, when the solid lubricating coatings have a relatively small coating thickness on the contact surfaces in the pipe axis direction that are related to apparent yield torque (the load flanks, the shoulder surfaces), it is possible to reduce the impact caused by reduction in rigidity of the solid lubricating coating. When each region of the threaded connection has an appropriate coating thickness of the solid lubricating coating as described above, it is possible to achieve low shouldering torque and high yield torque even with the solid lubricating coating in a single form.

A threaded connection according to the embodiments of the present disclosure is completed based on the above-mentioned findings.

The threaded connection according to the present embodiment is a threaded connection that connects steel pipes with each other. The threaded connection includes a pin having a pipe shape and a box having a pipe shape. The pin is provided continuously to a steel pipe body. The box is made up to the pin with insertion of the pin into the box. The pin includes a male thread part and a pin sealing surface. The male thread part is provided to an outer peripheral surface of the pin. The pin sealing surface is provided to the outer peripheral surface of the pin. The box includes a female thread part and a box sealing surface. The female thread part is provided to an inner peripheral surface of the box in such a way as to correspond to the male thread part, and is engaged with the male thread part in a made up state in which the pin and the box are made up to each other. The box sealing surface is provided to the inner peripheral surface of the box in such a way as to correspond to the pin sealing surface. The male thread part includes a male thread crest, a male thread root, a male thread stabbing flank, and a male thread load flank. The female thread part includes a female thread root, a female thread crest, a female thread stabbing flank, and a female thread load flank. The female thread root corresponds to the male thread crest. The female thread crest corresponds to the male thread root. The female thread stabbing flank corresponds to the male thread stabbing flank. The female thread load flank corresponds to the male thread load flank.

In an individual state before the pin and the box are made up to each other, a surface of at least one of the box or the pin is covered by an undercoating, and the surface covered by the undercoating is covered by a solid lubricating coating in a single form. In the individual state, the undercoating includes an alloy plating layer, and the solid lubricating coating is formed on the alloy plating layer. In the made up state, the pin sealing surface comes into interference contact with the box sealing surface, the male thread root comes into interference contact with the female thread crest, and the male thread load flank comes into pressure contact with the female thread load flank.

The threaded connection in the individual state has a following configuration. A coating thickness of the solid lubricating coating on the female thread load flank in a pipe axis direction of the threaded connection is smaller than a coating thickness of the solid lubricating coating on the female thread crest in a radial direction perpendicular to the pipe axis direction. A coating thickness of the solid lubricating coating on the box sealing surface in the radial direction is larger than the above-mentioned coating thickness of the solid lubricating coating on the female thread load flank. A coating thickness of the solid lubricating coating on the male thread load flank in the pipe axis direction is smaller than a coating thickness of the solid lubricating coating on the male thread root in the radial direction. A coating thickness of the solid lubricating coating on the pin sealing surface in the radial direction is larger than the above-mentioned coating thickness of the solid lubricating coating on the male thread load flank. In addition to the above, regarding a first coating thickness that is a total coating thickness of the solid lubricating coating and the undercoating on the female thread root, a second coating thickness that is a total coating thickness of the solid lubricating coating and the undercoating on the male thread crest, a third coating thickness that is a total coating thickness of the solid lubricating coating and the undercoating on the female thread crest, and a fourth coating thickness that is a total coating thickness of the solid lubricating coating and the undercoating on the male thread root, a first index is smaller than a second index, the first index being expressed by a value obtained by subtracting a sum total of the third coating thickness and the fourth coating thickness from a sum total of the first coating thickness and the second coating thickness, the second index being expressed by a distance between the male thread crest and the female thread root in the made up state in a case that assumes that each of the box and the pin includes neither the undercoating nor the solid lubricating coating (first configuration).

In the threaded connection according to the first configuration, the surface of at least one of the box or the pin is covered by the undercoating that includes the alloy plating layer, and the surface covered by the undercoating is covered by the solid lubricating coating in a single form. That is, the undercoating and the solid lubricating coating in a single form are laminated on the surface of at least one of the box or the pin in this order. The undercoating that includes the alloy plating layer increases adhesiveness between the solid lubricating coating and the surface of a member to which the solid lubricating coating is provided. In this specification, the undercoating and the solid lubricating coating may be collectively referred to as "laminated coating".

In the threaded connection according to the first configuration, in the made up state in which the pin and the box are made up to each other, that is, in the state in which made up of the pin to the box is completed, the pin sealing surface comes into interference contact with the box sealing surface, the male thread root comes into interference contact with the female thread crest, and the male thread load flank comes into pressure contact with the female thread load flank. The laminated coatings are interposed between the pin sealing surface and the box sealing surface that come into interference contact with each other. The laminated coatings are interposed between the male thread root and the female thread crest that come into interference contact with each other. The laminated coatings are interposed between the male thread load flank and the female thread load flank that come into pressure contact with each other.

In addition to the above, in the individual state before the pin and the box are made up to each other, for example, in the case in which the laminated coating is provided to each of the surface of the box and the surface of the pin, the coating thickness of the solid lubricating coating on the female thread load flank is smaller than the coating thickness of the solid lubricating coating on the female thread crest, and the coating thickness of the solid lubricating coating on the male thread load flank is smaller than the coating thickness of the solid lubricating coating on the male thread root. Further, the coating thickness of the solid lubricating coating on the box sealing surface is larger than the coating thickness of the solid lubricating coating on the female thread load flank, and the coating thickness of the solid lubricating coating on the pin sealing surface is larger than the coating thickness of the solid lubricating coating on the male thread load flank. In this case, in the box, of the female thread load flank, the female thread crest, and the box sealing surface, the female thread load flank has the smallest coating thickness of the solid lubricating coating, and each of the female thread crest and the box sealing surface has a larger coating thickness of the solid lubricating coating than the female thread load flank. In the pin, of the male thread load flank, the male thread root, and the pin sealing surface, the male thread load flank has the smallest coating thickness of the solid lubricating coating, and each of the male thread root and the pin sealing surface has a larger coating thickness of the solid lubricating coating than the male thread load flank. Therefore, the solid lubricating coatings have a relatively large coating thickness on the contact surfaces in the radial direction that are related to shouldering torque (the female thread crest and the male thread root, and the box sealing surface and the pin sealing surface), but the solid lubricating coatings have a relatively small coating thickness on the contact surfaces in the pipe axis direction that are related to apparent yield torque (the female thread load flank and the male thread load flank).

For example, in the case in which the laminated coating is provided to only the surface of the box, the coating thickness of the solid lubricating coating on the female thread load flank is smaller than the coating thickness of the solid lubricating coating on the female thread crest. Further, the coating thickness of the solid lubricating coating on the box sealing surface is larger than the coating thickness of the solid lubricating coating on the female thread load flank. In this case, of the female thread load flank, the female thread crest, and the box sealing surface, the female thread load flank has the smallest coating thickness of the solid lubricating coating, and each of the female thread crest and the box sealing surface has a larger coating thickness of the solid lubricating coating than the female thread load flank. Therefore, the solid lubricating coating has a relatively large coating thickness on the contact surfaces in the radial direction that are related to shouldering torque (the female thread crest, the box sealing surface), but the solid lubricating coating has a relatively small coating thickness on the contact surface in the pipe axis direction that is related to apparent yield torque (the female thread load flank).

For example, in the case in which the laminated coating is provided to only the surface of the pin, the coating thickness of the solid lubricating coating on the male thread load flank is smaller than the coating thickness of the solid lubricating coating on the male thread root. Further, the coating thickness of the solid lubricating coating on the pin sealing surface is larger than the coating thickness of the solid lubricating coating on the male thread load flank. In this case, of the male thread load flank, the male thread root, and the pin sealing surface, the male thread load flank has the smallest coating thickness of the solid lubricating coating, and each of the male thread root and the pin sealing surface has a larger coating thickness of the solid lubricating coating than the male thread load flank. Therefore, the solid lubricating coating has a relatively large coating thickness on the contact surfaces in the radial direction that are related to shouldering torque (the male thread root, the pin sealing surface), but the solid lubricating coating has a relatively small coating thickness on the contact surface in the pipe axis direction that is related to apparent yield torque (the male thread load flank).

In either case, the solid lubricating coating has a relatively large coating thickness on the contact surfaces in the radial direction that are related to shouldering torque and hence, it is possible to ensure good lubricity. Further, the solid lubricating coating has a relatively small coating thickness on the contact surface in the pipe axis direction that is related to apparent yield torque and hence, it is possible to reduce the impact caused by reduction in rigidity of the solid lubricating coating. As described above, it is possible to achieve suitable coating thicknesses of the solid lubricating coating in the respective regions of the threaded connection, and to achieve a low shouldering torque and a high yield torque. Further, the solid lubricating coating in a single form is used and hence, compared with the case in which two kinds of solid lubricating coating are used, the solid lubricating coating can be easily supplied and controlled, and the solid lubricating coating has a simple configuration. Accordingly, according to the threaded connection according to the first configuration, it is possible to expand the torque window with a simple and inexpensive configuration.

As described above, in the made up state, the male thread root comes into interference contact with the female thread crest. In this case, the male thread crest is in no contact with the female thread root, so that a gap is formed between the male thread crest and the female thread root. During a making up operation, the male thread crest and the female thread root basically do not slide along each other from the start of screwing to the completion of the screwing (completion of making up) except for immediately after insertion of the pin into the box. However, in a case in which the laminated coating provided to the male thread crest and/or female thread root has a large thickness that eliminate the gap, a situation occurs in which the surface of the solid lubricating coating comes into contact with the surface of the counterpart. When such a situation occurs, the solid lubricating coating is not pressed to a base metal surface, so that a state is brought about in which only a shearing force acts on the solid lubricating coating. Therefore, the solid lubricating coating is likely to peel off from the base metal surface. Note that a pressing force acts between the male thread root and the female thread crest that come into interference contact with each other and hence, the solid lubricating coating is less likely to peel off even when a shear force acts on the solid lubricating coating. When the solid lubricating coating significantly peels off, the peeled-off solid lubricating coating is deposited in a deviated state in the gap between the male thread crest and the female thread root, thus impeding smooth screwing of the pin. Consequently, a making up trouble, such as high shouldering, occurs and, as a result, the torque window is narrowed.

In contrast, in the threaded connection according to the first configuration, the first coating thickness, the second coating thickness, the third coating thickness, and the fourth coating thickness are configured as follows, the first coating thickness that is the total coating thickness of the solid lubricating coating and the undercoating on the female thread root, the second coating thickness that is the total coating thickness of the solid lubricating coating and the undercoating on the male thread crest, the third coating thickness that is the total coating thickness of the solid lubricating coating and the undercoating on the female thread crest, the fourth coating thickness that is the total coating thickness of the solid lubricating coating and the undercoating on the male thread root. The first index is smaller than the second index, the first index being expressed by the value obtained by subtracting the sum total of the third coating thickness and the fourth coating thickness from the sum total of the first coating thickness and the second coating thickness, the second index being expressed by the distance between the male thread crest and the female thread root in the made up state in the case that assumes that the box includes no laminated coating and the pin includes no laminated coating.

Specifically, for example, in the case in which the laminated coating is provided to each of the surface of the box and the surface of the pin, the first index is expressed by the value obtained by subtracting the sum total of the third coating thickness (the coating thickness of the laminated coating on the female thread crest) and the fourth coating thickness (the coating thickness of the laminated coating on the male thread root) from the sum total of the first coating thickness (the coating thickness of the laminated coating on the female thread root) and the second coating thickness (the coating thickness of the laminated coating on the male thread crest). For example, in the case in which the laminated coating is provided to only the surface of the box, the first index is expressed by the value obtained by subtracting the third coating thickness (the coating thickness of the laminated coating on the female thread crest) from the first coating thickness (the coating thickness of the laminated coating on the female thread root). For example, in the case in which the laminated coating is provided to only the surface of the pin, the first index is expressed by the value obtained by subtracting the fourth coating thickness (the coating thickness of the laminated coating on the male thread root) from the second coating thickness (the coating thickness of the laminated coating on the male thread crest). The second index corresponds to a separation (gap) in the radial direction between the male thread crest and the female thread root in a state in which making up between the box and the pin each including no laminated coating is completed, so that the male thread root is in interference contact with the female thread crest.

In any of these cases, when the first index is smaller than the second index, in performing a making up operation, a situation does not occur in which the surface of the solid lubricating coating comes into contact with the surface of the counterpart, between the male thread crest and the female thread root. According to the threaded connection according to the first configuration, the first index is smaller than the second index and hence, it is possible to prevent a making up trouble in advance and, particularly, it is possible to prevent narrowing of the torque window by causing the shouldering torque to stabilize at a low position.

In the threaded connection according to the first configuration, it is preferable that the undercoating further includes a passivation treatment film, and the passivation treatment film is formed between the alloy plating layer and the solid lubricating coating (second configuration). In this case, in the box and/or pin to which the solid lubricating coating is provided, corrosion resistance of the alloy plating layer can be improved by the passivation treatment film.

In the threaded connection according to the first configuration or the second configuration, it is preferable that unevenness is formed on the above-mentioned surface, on which the undercoating is formed, by performing blasting process (third configuration). In this case, the unevenness increases adhesiveness between the undercoating and the surface of the box and/or pin to which the solid lubricating coating is provided, and the surface of the undercoating also has unevenness and hence, adhesiveness between the solid lubricating coating and the undercoating also increases.

It is preferable that the threaded connection according to any one of the first configuration to the third configuration have the following configuration. The pin further includes a pin shoulder surface. The pin shoulder surface is provided at a front end of the pin. The box further includes a box shoulder surface. The box shoulder surface is provided at an inner depth portion of the box in such a way as to correspond to the pin shoulder surface. In the made up state, the pin shoulder surface comes into pressure contact with the box shoulder surface. The threaded connection in the individual state has a following configuration. A coating thickness of the solid lubricating coating on the box shoulder surface in the pipe axis direction is smaller than the above-mentioned coating thickness of the solid lubricating coating on the female thread crest. A coating thickness of the solid lubricating coating on the pin shoulder surface in the pipe axis direction is smaller than the above-mentioned coating thickness of the solid lubricating coating on the male thread root (fourth configuration).

In the threaded connection according to the fourth configuration, the pin includes the shoulder surface (the pin shoulder surface) and the box includes the shoulder surface (the box shoulder surface), the shoulder surfaces (the pin shoulder surface and the box shoulder surface) coming into pressure contact with each other in the made up state. That is, the threaded connection has a shouldering mechanism. In this case, in a typical example, the kind of thread is a buttress thread (trapezoidal-shaped thread). In the made up state, the laminated coatings are interposed between the pin shoulder surface and the box shoulder surface that come into pressure contact with each other.

In the threaded connection according to the fourth configuration, in the individual state, in the case in which the laminated coating is provided to each of the surface of the box and the surface of the pin, for example, the coating thickness of the solid lubricating coating on the box shoulder surface is smaller than the coating thickness of the solid lubricating coating on the female thread crest, and the coating thickness of the solid lubricating coating on the pin shoulder surface is smaller than the coating thickness of the solid lubricating coating on the male thread root. In this case, in the box, each of the female thread crest and the box sealing surface has a larger coating thickness of the solid lubricating coating than the female thread load flank as described above and, in addition to the above, the box shoulder surface has a smaller coating thickness of the solid lubricating coating than the female thread crest. In the pin, each of the male thread root and the pin sealing surface has a larger coating thickness of the solid lubricating coating than the male thread load flank as described above and, in addition to the above, the pin shoulder surface has a smaller coating thickness of the solid lubricating coating than the male thread root. Therefore, the solid lubricating coatings have a relatively small coating thickness on the contact surfaces in the pipe axis direction that are related to apparent yield torque (the female thread load flank and the male thread load flank, and the box shoulder surface and the pin shoulder surface).

For example, in the case in which the laminated coating is provided to only the surface of the box, the coating thickness of the solid lubricating coating on the box shoulder surface is smaller than the coating thickness of the solid lubricating coating on the female thread crest. In this case, each of the female thread crest and the box sealing surface has a larger coating thickness of the solid lubricating coating than the female thread load flank as described above and, in addition to the above, the box shoulder surface has a smaller coating thickness of the solid lubricating coating than the female thread crest. Therefore, the solid lubricating coating has a relatively small coating thickness on the contact surfaces in the pipe axis direction that are related to apparent yield torque (the female thread load flank, the box shoulder surface).

For example, in the case in which the laminated coating is provided to only the surface of the pin, the coating thickness of the solid lubricating coating on the pin shoulder surface is smaller than the coating thickness of the solid lubricating coating on the male thread root. In this case, each of the male thread root and the pin sealing surface has a larger coating thickness of the solid lubricating coating than the male thread load flank as described above and, in addition to the above, the pin shoulder surface has a smaller coating thickness of the solid lubricating coating than the male thread root. Therefore, the solid lubricating coating has a relatively small coating thickness on the contact surfaces in the pipe axis direction that are related to apparent yield torque (the male thread load flank, the pin shoulder surface).

As described above, in any of the cases of the threaded connection according to the fourth configuration having a shouldering mechanism, the solid lubricating coating has a relatively small coating thickness on the contact surfaces in the pipe axis direction that are related to apparent yield torque. Accordingly, the threaded connection according to the fourth configuration can obtain advantageous effects substantially equal to the advantageous effects obtained by the above-mentioned threaded connection according to the first configuration.

It is preferable that the threaded connection according to the fourth configuration have the following configuration. The threaded connection in the individual state has a following configuration. The above-mentioned coating thickness of the solid lubricating coating on the box shoulder surface is smaller than the above-mentioned coating thickness of the solid lubricating coating on the box sealing surface. The above-mentioned coating thickness of the solid lubricating coating on the pin shoulder surface is smaller than the above-mentioned coating thickness of the solid lubricating coating on the pin sealing surface (fifth configuration).

The threaded connection according to the fifth configuration is based on the threaded connection according to the fourth configuration having a shouldering mechanism. In the threaded connection according to the fifth configuration, in the individual state, in the case in which the laminated coating is provided to each of the surface of the box and the surface of the pin, for example, the coating thickness of the solid lubricating coating on the box shoulder surface is smaller than the coating thickness of the solid lubricating coating on the box sealing surface, and the coating thickness of the solid lubricating coating on the pin shoulder surface is smaller than the coating thickness of the solid lubricating coating on the pin sealing surface. In this case, in the box, each of the female thread crest and the box sealing surface has a larger coating thickness of the solid lubricating coating than the female thread load flank as described above and, in addition to the above, the box shoulder surface has a smaller coating thickness of the solid lubricating coating than the box sealing surface. In the pin, each of the male thread root and the pin sealing surface has a larger coating thickness of the solid lubricating coating than the male thread load flank as described above and, in addition to the above, the pin shoulder surface has a smaller coating thickness of the solid lubricating coating than the pin sealing surface. Therefore, the solid lubricating coatings have a relatively small coating thickness on the contact surfaces in the pipe axis direction that are related to apparent yield torque (the female thread load flank and the male thread load flank, and the box shoulder surface and the pin shoulder surface).

For example, in the case in which the laminated coating is provided to only the surface of the box, the coating thickness of the solid lubricating coating on the box shoulder surface is smaller than the coating thickness of the solid lubricating coating on the box sealing surface. In this case, each of the female thread crest and the box sealing surface has a larger coating thickness of the solid lubricating coating than the female thread load flank as described above and, in addition to the above, the box shoulder surface has a smaller coating thickness of the solid lubricating coating than the box sealing surface. Therefore, the solid lubricating coating has a relatively small coating thickness on the contact surfaces in the pipe axis direction that are related to apparent yield torque (the female thread load flank, the box shoulder surface).

For example, in the case in which the laminated coating is provided to only the surface of the pin, the coating thickness of the solid lubricating coating on the pin shoulder surface is smaller than the coating thickness of the solid lubricating coating on the pin sealing surface. In this case, each of the male thread root and the pin sealing surface has a larger coating thickness of the solid lubricating coating than the male thread load flank as described above and, in addition to the above, the pin shoulder surface has a smaller coating thickness of the solid lubricating coating than the pin sealing surface. Therefore, the solid lubricating coating has a relatively small coating thickness on the contact surfaces in the pipe axis direction that are related to apparent yield torque (the male thread load flank, the pin shoulder surface).

As described above, in any of the cases of the threaded connection according to the fifth configuration, the solid lubricating coating has a relatively small coating thickness on the contact surfaces in the pipe axis direction that are related to apparent yield torque. Accordingly, the threaded connection according to the fifth configuration can obtain advantageous effects substantially equal to the advantageous effects obtained by the above-mentioned threaded connection according to the first configuration.

It is preferable that the threaded connection according to the fourth configuration or the fifth configuration have the following configuration. Regarding a fifth coating thickness that is a total coating thickness of the solid lubricating coating and the undercoating on the female thread load flank, a sixth coating thickness that is a total coating thickness of the solid lubricating coating and the undercoating on the male thread load flank, a seventh coating thickness that is a total coating thickness of the solid lubricating coating and the undercoating on the female thread stabbing flank, and an eighth coating thickness that is a total coating thickness of the solid lubricating coating and the undercoating on the male thread stabbing flank, a third index is smaller than a fourth index, the third index being expressed by a total value of the fifth coating thickness, the sixth coating thickness, the seventh coating thickness, and the eighth coating thickness, the fourth index being expressed by a distance between the male thread stabbing flank and the female thread stabbing flank in the made up state in the case that assumes that each of the box and the pin includes neither the undercoating nor the solid lubricating coating (sixth configuration).

As described above, in the made up state, the male thread load flank comes into pressure contact with the female thread load flank. In this case, in the threaded connection having a shouldering mechanism, the male thread stabbing flank is in no contact with the female thread stabbing flank, so that a gap is formed between the male thread stabbing flank and the female thread stabbing flank. When the total coating thickness of the laminated coatings provided to the respective flanks is larger than the gap formed between the stabbing flanks in the made up state in the case that assumes that the box includes no laminated coating and the pin includes no laminated coating, contact sliding occurs both between the load flanks and between the stabbing flanks at the stage in which the male thread root and the female thread crest slide along each other while coming into interference contact. In this case, not only that a sliding area increases but also that pushing between the load flanks and pushing between the stabbing flanks occur simultaneously. Therefore, even when the solid lubricating coating functions, torque resistance rises, leading to a rise in shouldering torque and, as a result, the torque window is narrowed.

In contrast, the threaded connection according to the sixth configuration is based on the threaded connection according to the fourth configuration having a shouldering mechanism. In the threaded connection, the fifth coating thickness, the sixth coating thickness, the seventh coating thickness, and the eighth coating thickness are configured as follows, the fifth coating thickness that is the total coating thickness of the solid lubricating coating and the undercoating on the female thread load flank, the sixth coating thickness that is the total coating thickness of the solid lubricating coating and the undercoating on the male thread load flank, the seventh coating thickness that is the total coating thickness of the solid lubricating coating and the undercoating on the female thread stabbing flank, the eighth coating thickness that is the total coating thickness of the solid lubricating coating and the undercoating on the male thread stabbing flank. The third index is smaller than the fourth index, the third index being expressed by the total value of the fifth coating thickness, the sixth coating thickness, the seventh coating thickness, and the eighth coating thickness, the fourth index being expressed by the distance between the male thread stabbing flank and the female thread stabbing flank in the made up state in the case that assumes that the box includes no laminated coating and the pin includes no laminated coating.

Specifically, for example, in the case in which the laminated coating is provided to each of the surface of the box and the surface of the pin, the third index is expressed by the total value of the fifth coating thickness (the coating thickness of the laminated coating on the female thread load flank), the sixth coating thickness (the coating thickness of the laminated coating on the male thread load flank), the seventh coating thickness (the coating thickness of the laminated coating on the female thread stabbing flank), and the eighth coating thickness (the coating thickness of the laminated coating on the male thread stabbing flank). For example, in the case in which the laminated coating is provided to only the surface of the box, the third index is expressed by the total value of the fifth coating thickness (the coating thickness of the laminated coating on the female thread load flank) and the seventh coating thickness (the coating thickness of the laminated coating on the female thread stabbing flank). For example, in the case in which the laminated coating is provided to only the surface of the pin, the third index is expressed by the total value of the sixth coating thickness (the coating thickness of the laminated coating on the male thread load flank) and the eighth coating thickness (the coating thickness of the laminated coating on the male thread stabbing flank). The fourth index corresponds to a separation (gap) in the pipe axis direction between the male thread stabbing flank and the female thread stabbing flank in a state in which making up between the box and the pin each including no laminated coating is completed, so that the male thread load flank is in interference contact with the female thread load flank.

In any of these cases, when the third index is smaller than the fourth index, there is no possibility that contact sliding occurs both between the load flanks and between the stabbing flanks at the stage in which the male thread root and the female thread crest slide along each other while coming into interference contact. According to the threaded connection according to the sixth configuration, the third index is smaller than the fourth index and hence, a rise in torque resistance can be suppressed, thus suppressing a rise in shouldering torque and, as a result, it is possible to prevent narrowing of the torque window.

In the threaded connection according to any one of the first configuration to the sixth configuration, it is preferable that the pin is provided to each of the steel pipes that are to be connected with each other, and the box is provided to a coupling that is a part having a pipe shape separately from the steel pipes (seventh configuration). In this case, the threaded connection is of a coupling type.

In the threaded connection according to any one of the first configuration to the seventh configuration, it is preferable that the solid lubricating coating contains a resin and a solid lubricating powder (eighth configuration).

In the threaded connection according to the eighth configuration, it is preferable that the resin is an epoxy resin, and the solid lubricating powder is polytetrafluoroethylene (ninth configuration).

In the threaded connection according to the first configuration, it is preferable that, in the individual state, the box includes the undercoating and the solid lubricating coating, and the pin includes neither the undercoating nor the solid lubricating coating (tenth configuration).

In general, the solid lubricating coating is formed by spraying a coating composition having flowability on a target member (the box and/or pin) and by solidifying the coating composition. For example, in the case in which the solid lubricating coating is provided to the pin in the threaded connection according to the first configuration, in the male thread part, it is necessary to cause the male thread root to have a large coating thickness, and to cause the male thread load flank to have a small coating thickness. When the coating composition is sprayed on the male thread part, the coating composition sprayed on the area of the male thread crest directly adheres to the male thread crest, and the coating composition sprayed on the area of the male thread root is distributed to the male thread root, the male thread load flank, and the male thread stabbing flank. Therefore, the solid lubricating coating on the male thread root is less likely to have a large coating thickness.

In contrast, in the case in which the solid lubricating coating is provided to the box, in the female thread part, it is necessary to cause the female thread crest to have a large coating thickness, and to cause the female thread load flank to have a small coating thickness. When the coating composition is sprayed on the female thread part, the coating composition sprayed on the area of the female thread crest directly adheres to the female thread crest, and the coating composition sprayed on the area of the female thread root is distributed to the female thread root, the female thread load flank, and the female thread stabbing flank. Therefore, the solid lubricating coating on the female thread crest is likely to have a large coating thickness, and the solid lubricating coating on the female thread load flank is likely to have a small coating thickness. In the threaded connection according to the tenth configuration, the box is the only target to which the solid lubricating coating is provided. Therefore, it is possible to easily form the solid lubricating coating having appropriate coating thicknesses in required regions.

In the threaded connection according to the tenth configuration, in the same manner as the threaded connection according to the first configuration in the case in which the laminated coating is provided to only the surface of the box, the coating thickness of the solid lubricating coating on the female thread load flank is smaller than the coating thickness of the solid lubricating coating on the female thread crest. Further, the coating thickness of the solid lubricating coating on the box sealing surface is larger than the coating thickness of the solid lubricating coating on the female thread load flank. In this case, of the female thread load flank, the female thread crest, and the box sealing surface, the female thread load flank has the smallest coating thickness of the solid lubricating coating, and each of the female thread crest and the box sealing surface has a larger coating thickness of the solid lubricating coating than the female thread load flank. Therefore, the solid lubricating coating has a relatively large coating thickness on the contact surfaces in the radial direction that are related to shouldering torque (the female thread crest, the box sealing surface), but the solid lubricating coating has a relatively small coating thickness on the contact surface in the pipe axis direction that is related to apparent yield torque (the female thread load flank). Accordingly, according to the threaded connection according to the tenth configuration, in the same manner as the threaded connection according to the first configuration, it is possible to expand the torque window with a simple and inexpensive configuration.

In the threaded connection according to the tenth configuration, in the same manner as the threaded connection according to the first configuration in the case in which the laminated coating is provided to only the surface of the box, the first index is expressed by the value obtained by subtracting the third coating thickness (the coating thickness of the laminated coating on the female thread crest) from the first coating thickness (the coating thickness of the laminated coating on the female thread root). The second index corresponds to a separation (gap) in the radial direction between the male thread crest and the female thread root in a state in which making up between the box and the pin each including no laminated coating is completed, so that the male thread root is in interference contact with the female thread crest. The first index is smaller than the second index and hence, in performing a making up operation, a situation does not occur in which the surface of the solid lubricating coating comes into contact with the surface of the counterpart, between the male thread crest and the female thread root. Accordingly, according to the threaded connection according to the tenth configuration, in the same manner as the threaded connection according to the first configuration, it is possible to prevent a making up trouble in advance and, particularly, it is possible to prevent narrowing of the torque window by causing the shouldering torque to stabilize at a low position.

It is preferable that the threaded connection according to the tenth configuration have the following configuration. The pin further includes a pin shoulder surface. The pin shoulder surface is provided at a front end of the pin. The box further includes a box shoulder surface. The box shoulder surface is provided at an inner depth portion of the box in such a way as to correspond to the pin shoulder surface. In the made up state, the pin shoulder surface comes into pressure contact with the box shoulder surface. The pin is provided to each of the steel pipes that are to be connected with each other. The box is provided to a coupling that is a part having a pipe shape separately from the steel pipes. The solid lubricating coating contains an epoxy resin and a solid lubricating powder. The solid lubricating powder is made from polytetrafluoroethylene. The undercoating includes a Zn alloy plating layer as the alloy plating layer, and includes a passivation treatment film. The passivation treatment film is formed between the Zn alloy plating layer and the solid lubricating coating. Unevenness is formed on the surface of the box, on which the undercoating is formed, by performing blasting process. In the individual state, a coating thickness of the solid lubricating coating on the box shoulder surface in the pipe axis direction is smaller than the above-mentioned coating thickness of the solid lubricating coating on the female thread crest (eleventh configuration).

The threaded connection according to the eleventh configuration is based on the threaded connection according to the tenth configuration in which the laminated coating is provided to only the box. The threaded connection according to the eleventh configuration has a shouldering mechanism in the same manner as the threaded connection according to the fourth configuration, and the coating thickness of the solid lubricating coating on the box shoulder surface is smaller than the coating thickness of the solid lubricating coating on the female thread crest. In this case, each of the female thread crest and the box sealing surface has a larger coating thickness of the solid lubricating coating than the female thread load flank as described above and, in addition to the above, the box shoulder surface has a smaller coating thickness of the solid lubricating coating than the female thread crest. The threaded connection according to the eleventh configuration is also of a coupling type in the same manner as the threaded connection according to the seventh configuration. In the threaded connection according to the eleventh configuration, the undercoating that includes the Zn alloy plating layer increases adhesiveness between the solid lubricating coating and the surface of the box to which the solid lubricating coating is provided. In the same manner as the threaded connection according to the second configuration, in the box to which the solid lubricating coating is provided, corrosion resistance of the Zn alloy plating layer can be improved by the passivation treatment film. In the same manner as the threaded connection according to the third configuration, unevenness increases adhesiveness between the undercoating and the surface of the box to which the solid lubricating coating is provided, and the surface of the undercoating also has unevenness and hence, adhesiveness between the solid lubricating coating and the undercoating also increases.

In the threaded connection according to the eleventh configuration, it is preferable that, in the individual state, the above-mentioned coating thickness of the solid lubricating coating on the box shoulder surface is smaller than the above-mentioned coating thickness of the solid lubricating coating on the box sealing surface (twelfth configuration).

The threaded connection according to the twelfth configuration is based on the threaded connection according to the eleventh configuration. That is, the threaded connection according to the twelfth configuration is based on the threaded connection according to the tenth configuration in which the laminated coating is provided to only the box. In the threaded connection according to the twelfth configuration, the coating thickness of the solid lubricating coating on the box shoulder surface is smaller than the coating thickness of the solid lubricating coating on the box sealing surface and hence, in the same manner as the threaded connection according to the fifth configuration, each of the female thread crest and the box sealing surface has a larger coating thickness of the solid lubricating coating than the female thread load flank as described above and, in addition to the above, the box shoulder surface has a smaller coating thickness of the solid lubricating coating than the box sealing surface. Therefore, the solid lubricating coating has a relatively small coating thickness on the contact surfaces in the pipe axis direction that are related to apparent yield torque (the female thread load flank, the box shoulder surface). Accordingly, the threaded connection according to the twelfth configuration can obtain advantageous effects substantially equal to the advantageous effects obtained by the above-mentioned threaded connection according to the fifth configuration.

It is preferable that the threaded connection according to the eleventh configuration or the twelfth configuration have the following configuration. Regarding a fifth coating thickness that is a total coating thickness of the solid lubricating coating and the undercoating on the female thread load flank and a seventh coating thickness that is a total coating thickness of the solid lubricating coating and the undercoating on the female thread stabbing flank, a third index is smaller than a fourth index, the third index being expressed by a total value of the fifth coating thickness and the seventh coating thickness, the fourth index being expressed by a distance between the male thread stabbing flank and the female thread stabbing flank in the made up state in the case that assumes that each of the box and the pin includes neither the undercoating nor the solid lubricating coating (thirteenth configuration).

The threaded connection according to the thirteenth configuration is based on the threaded connection according to the eleventh configuration. That is, the threaded connection according to the thirteenth configuration is based on the threaded connection according to the tenth configuration in which the laminated coating is provided to only the box. In the threaded connection according to the thirteenth configuration, in the same manner as the threaded connection according to the sixth configuration in the case in which the laminated coating is provided to only the surface of the box, the third index is expressed by the total value of the fifth coating thickness (the coating thickness of the laminated coating on the female thread load flank) and the seventh coating thickness (the coating thickness of the laminated coating on the female thread stabbing flank). The fourth index corresponds to a separation (gap) in the pipe axis direction between the male thread stabbing flank and the female thread stabbing flank in a state in which making up between the box and the pin each including no laminated coating is completed, so that the male thread load flank is in interference contact with the female thread load flank. The third index is smaller than the fourth index and hence, there is no possibility that contact sliding occurs both between the load flanks and between the stabbing flanks at the stage in which the male thread root and the female thread crest slide along each other while coming into interference contact. Accordingly, according to the threaded connection according to the thirteenth configuration, in the same manner as the threaded connection according to the sixth configuration, a rise in torque resistance can be suppressed, thus suppressing a rise in shouldering torque and, as a result, it is possible to prevent narrowing of the torque window.

In the threaded connection according to any one of the tenth configuration to the thirteenth configuration, it is preferable that, in the individual state, a surface of the pin is covered by a chemical treatment coating, and the surface covered by the chemical treatment coating is covered by a rust preventive oil coating (fourteenth configuration).

The threaded connection according to the fourteenth configuration is based on the threaded connection according to the tenth configuration in which the laminated coating is provided to only the box. In the threaded connection according to the fourteenth configuration, the laminated coating is not provided to the pin. Instead, the chemical treatment coating and the rust preventive oil coating are laminated on the surface of the pin in this order. Consequently, rust-proof treatment is sufficiently applied to the pin at a low cost.

Hereinafter, embodiments of the present disclosure will be described with reference to drawings. In the respective drawings, the same or identical components are given the same reference symbols, and the repeated description will be omitted.

### FIRST EMBODIMENT

### [Configuration of threaded connection]

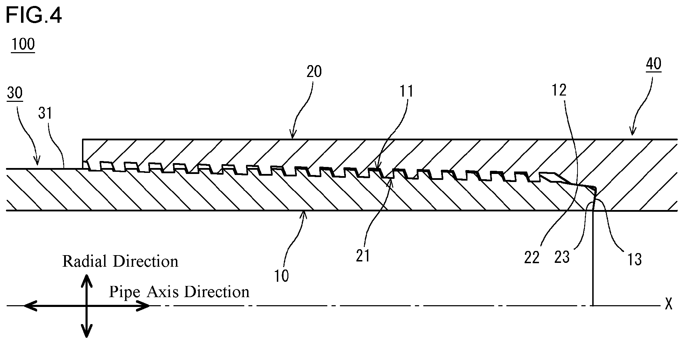

FIG. 4 is a longitudinal cross-sectional view of a threaded connection 100 according to a first embodiment. The longitudinal cross section of the threaded connection 100 is a cross section of the threaded connection 100 taken along a plane that includes a pipe axis X. In this specification, a direction in which the pipe axis X extends may be referred to as "pipe axis direction". The radial direction of the threaded connection 100, that is, a direction perpendicular to the pipe axis direction may be simply referred to as "radial direction".

Referring to FIG. 4, the threaded connection 100 is used to connect steel pipes 30 with each other. The threaded connection 100 includes a pin 10 having a pipe shape and a box 20 having a pipe shape. The pin 10 is provided at the end portion of the steel pipe 30. In the example of the present embodiment, the box 20 is provided to a coupling 40 that is a part having a pipe shape separately from the steel pipe 30, which is a connection target. That is, the threaded connection 100 is of a coupling type. Examples of the material of the steel pipe 30 (strictly speaking, the material of the base metal of the steel pipe 30) include low chromium alloy martensitic steel, martensitic stainless steel, ferritic stainless steel, austenitic stainless steel, and duplex stainless steel. The material of the coupling 40 (strictly speaking, the material of the base metal of the coupling 40) may be the same as or different from the material of the steel pipe 30.

The pin 10 is inserted into and made up to the box 20. The pin 10 is provided continuously to a body 31 of the steel pipe 30. The pin 10 includes a male thread part 11 and a pin sealing surface 12. In the example of the present embodiment, the pin 10 further includes a pin shoulder surface 13. The male thread part 11, the pin sealing surface 12, and the pin shoulder surface 13 are arranged in this order from the steel pipe body 31 side toward the front end side of the pin 10.

The male thread part 11 is provided to the outer peripheral surface of the pin 10. The male thread part 11 is disposed at a position closer to the steel pipe body 31 side than the pin sealing surface 12. The male thread part 11 extends from the vicinity of the pin sealing surface 12 to the vicinity of the steel pipe body 31. The male thread part 11 is formed of a tapered thread. Examples of the kind of thread forming the male thread part 11 include an API-standard buttress thread (trapezoidal-shaped thread) and a square thread.

The pin sealing surface 12 is provided to the outer peripheral surface of the pin 10 at a position between the male thread part 11 and the pin shoulder surface 13. The pin sealing surface 12 is the outside surface of the side of a rotary body that uses the pipe axis X as the axial centerline. When the threaded connection 100 is viewed in a longitudinal cross-sectional view, the pin sealing surface 12 may be a curved line that is convex toward the box 20, or may be a straight line that is inclined with respect to the pipe axis X in such a way as to approach the pipe axis X as the pin sealing surface 12 extends toward the front end side of the pin 10. The pin sealing surface 12 may be formed by combining two or more kinds of such a curved line and/or straight line.

The pin shoulder surface 13 is provided at the front end of the pin 10. The pin shoulder surface 13 is an annular face that forms the pipe end face of the pin 10 and that uses the pipe axis X as the axial centerline. The pin shoulder surface 13 may be or may not be inclined such that the outer circumferential edge of the pin shoulder surface 13 is located at a position closer to the front end side of the pin 10 than the inner circumferential edge of the pin shoulder surface 13.

The box 20 includes a female thread part 21 and a box sealing surface 22. In the example of the present embodiment, the box 20 further includes a box shoulder surface 23. The female thread part 21, the box sealing surface 22, and the box shoulder surface 23 are provided to the box 20 in such a way as to respectively correspond to the male thread part 11, the pin sealing surface 12, and the pin shoulder surface 13.

The female thread part 21 is provided to the inner peripheral surface of the box 20. The female thread part 21 is disposed at a position closer to the pipe end side of the box 20 than the box sealing surface 22. The female thread part 21 extends from the vicinity of the box sealing surface 22 to the vicinity of the pipe end of the box 20. The female thread part 21 is formed of a tapered thread that engages with the male thread part 11 of the pin 10. To allow the female thread part 21 to correspond to the male thread part 11, examples of the kind of thread forming the female thread part 21 include an API-standard buttress thread (trapezoidal-shaped thread) and a square thread.

The box sealing surface 22 is provided to the inner peripheral surface of the box 20 at a position between the female thread part 21 and the box shoulder surface 23. The box sealing surface 22 is an inside surface of the side of a rotary body that uses the pipe axis X as the axial centerline. When the threaded connection 100 is viewed in a longitudinal cross-sectional view, the box sealing surface 22 may be a curved line that is convex toward the pin 10, or may be a straight line that is inclined with respect to the pipe axis X in such a way as to approach the pipe axis X as the box sealing surface 22 extends toward the inner depth side of the box 20. The box sealing surface 22 may be formed by combining two or more kinds of such a curved line and/or straight line.

The box shoulder surface 23 is provided at the inner depth portion of the box 20 in such a way as to correspond to the pin shoulder surface 13. In the same manner as the pin shoulder surface 13, the box shoulder surface 23 is an annular face that uses the pipe axis X as the axial centerline. The box shoulder surface 23 may be or may not be inclined such that the outer circumferential edge of the box shoulder surface 23 is located at a position closer to the inner depth side of the box 20 than the inner circumferential edge of the box shoulder surface 23. The inclined angle (shoulder angle) of the box shoulder surface 23 is substantially equal to the inclined angle of the pin shoulder surface 13.

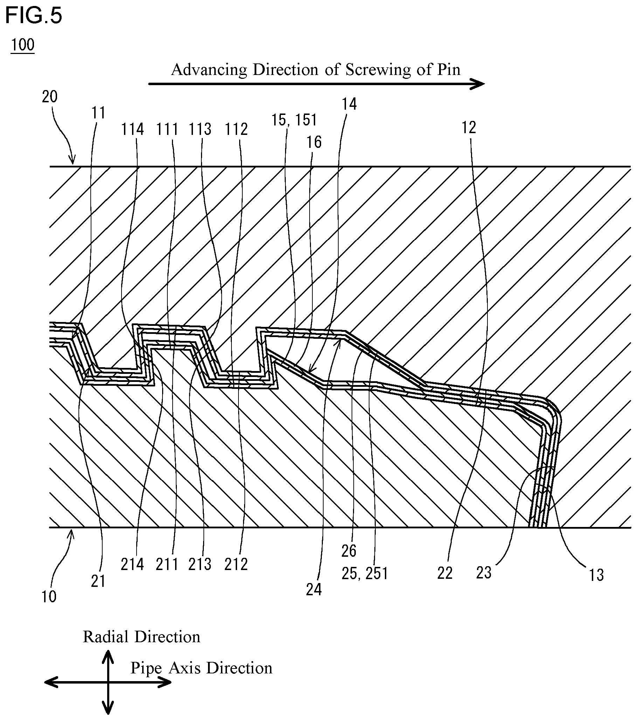

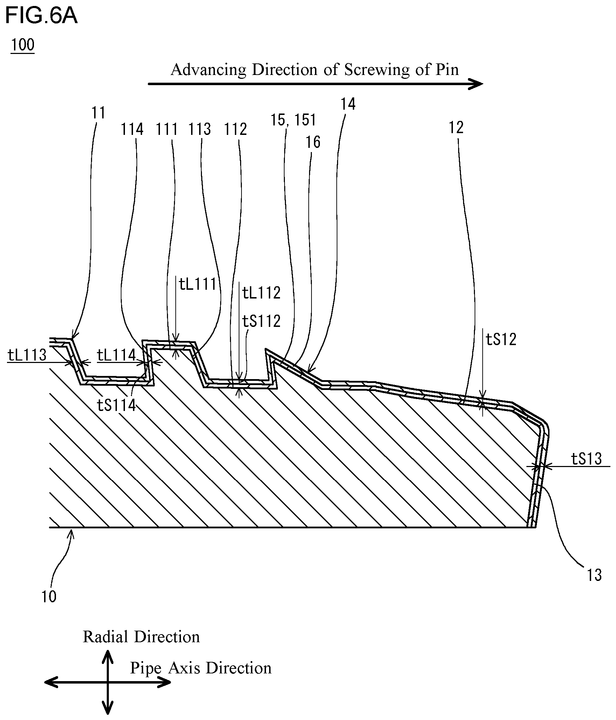

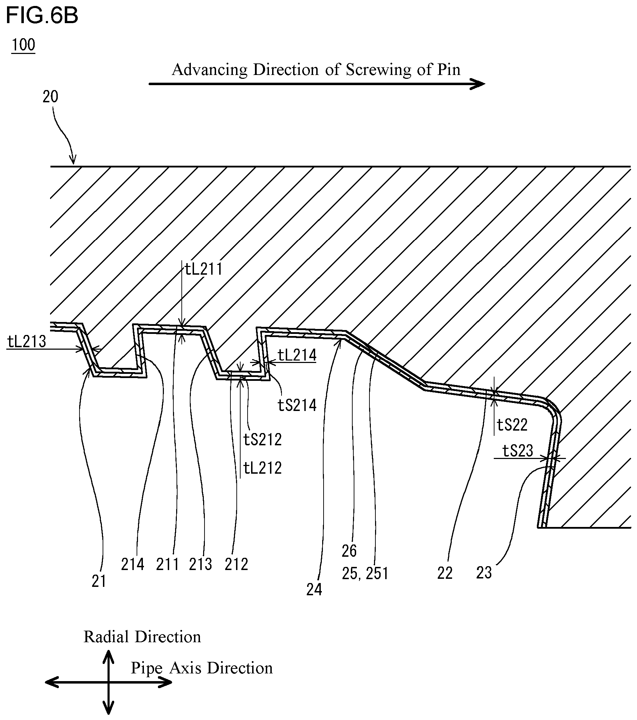

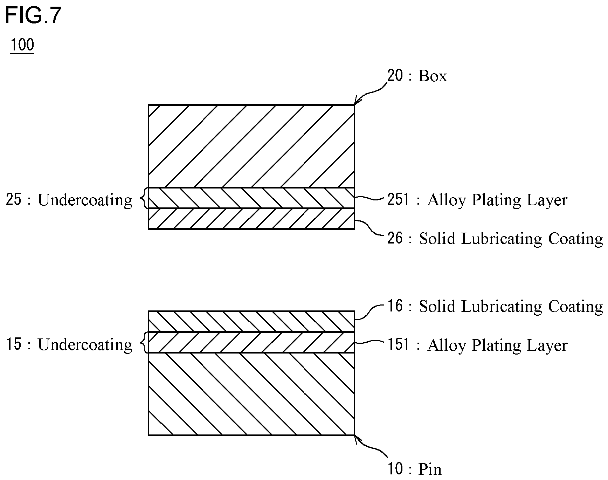

Hereinafter, the configuration of the threaded connection 100 according to the present embodiment will be described in more detail with reference to FIG. 5 to FIG. 11. FIG. 5 is a partially enlarged view of the threaded connection 100 shown in FIG. 4. FIG. 6A and FIG. 6B are longitudinal cross-sectional views showing the pin 10 or the box 20 of the threaded connection 100 shown in FIG. 5 in an individual state before the pin 10 and the box 20 are made up to each other. FIG. 6A shows the pin 10. FIG. 6B shows the box 20. FIG. 7 is a schematic view showing the near-surface portions of the pin 10 and the box 20 of the threaded connection 100 in an individual state.

Referring to FIG. 5, FIG. 6A, and FIG. 6B, the male thread part 11 includes a male thread crest 111, a male thread root 112, a male thread stabbing flank 113, and a male thread load flank 114. The female thread part 21 includes a female thread root 211, a female thread crest 212, a female thread stabbing flank 213, and a female thread load flank 214. The female thread root 211, the female thread crest 212, the female thread stabbing flank 213, and the female thread load flank 214 are provided to the box 20 in such a way as to respectively correspond to the male thread crest 111, the male thread root 112, the male thread stabbing flank 113, and the male thread load flank 114.

In the male thread part 11, the male thread crest 111 is coupled to the male thread root 112 by the male thread stabbing flank 113 and the male thread load flank 114. The male thread stabbing flank 113 is located at a position frontward of the male thread crest 111 in the direction in which screwing of the pin 10 into the box 20 advances during making up. The male thread load flank 114 is located at a position rearward of the male thread crest 111 in the direction in which screwing of the pin 10 advances.

When the threaded connection 100 is viewed in a longitudinal cross-sectional view, the male thread crest 111 and the male thread root 112 are straight lines inclined with respect to the pipe axis X in such a way as to approach the pipe axis X as the male thread crest 111 and the male thread root 112 extend toward the front end side of the pin 10. When the threaded connection 100 is viewed in a longitudinal cross-sectional view, the male thread crest 111 and the male thread root 112 may be straight lines parallel to the pipe axis X.

When the threaded connection 100 is viewed in a longitudinal cross-sectional view, the male thread stabbing flank 113 is a straight line that is inclined such that the outer circumferential edge of the male thread stabbing flank 113 is located at a position closer to the steel pipe body 31 than the inner circumferential edge of the male thread stabbing flank 113.

In the same manner as the male thread stabbing flank 113, when the threaded connection 100 is viewed in a longitudinal cross-sectional view, the male thread load flank 114 is a straight line that is inclined such that the outer circumferential edge of the male thread load flank 114 is located at a position closer to the steel pipe body 31 than the inner circumferential edge of the male thread load flank 114. When the threaded connection 100 is viewed in a longitudinal cross-sectional view, the male thread load flank 114 may be a straight line that is inclined such that the outer circumferential edge of the male thread load flank 114 is located at a position closer to the front end side of the pin 10 than the inner circumferential edge of the male thread load flank 114, or may be a straight line perpendicular to the pipe axis X.

In the female thread part 21, the female thread root 211 and the female thread crest 212 are coupled to each other by the female thread stabbing flank 213 and the female thread load flank 214. The female thread stabbing flank 213 is located at a position frontward of the female thread root 211 in the direction in which screwing of the pin 10 advances during making up. The female thread load flank 214 is located at a position rearward of the female thread root 211 in the direction in which screwing of the pin 10 advances.

When the threaded connection 100 is viewed in a longitudinal cross-sectional view, the female thread root 211 and the female thread crest 212 are straight lines inclined with respect to the pipe axis X in such a way as to approach the pipe axis X as the female thread root 211 and the female thread crest 212 extend toward the inner depth side of the box 20. The inclined angle of the female thread root 211 is substantially equal to the inclined angle of the male thread crest 111, and the inclined angle of the female thread crest 212 is substantially equal to the inclined angle of the male thread root 112. In the same manner as the male thread crest 111 and the male thread root 112, when the threaded connection 100 is viewed in a longitudinal cross-sectional view, the female thread root 211 and the female thread crest 212 may be straight lines parallel to the pipe axis X. In short, the female thread root 211 is parallel to the male thread crest 111, and the female thread crest 212 is parallel to the male thread root 112.

When the threaded connection 100 is viewed in a longitudinal cross-sectional view, the female thread stabbing flank 213 is a straight line that is inclined such that the outer circumferential edge of the female thread stabbing flank 213 is located at a position closer to the pipe end side of the box 20 than the inner circumferential edge of the female thread stabbing flank 213. The inclined angle of the female thread stabbing flank 213 is substantially equal to the inclined angle of the male thread stabbing flank 113. In short, the female thread stabbing flank 213 is parallel to the male thread stabbing flank 113.

In the same manner as the female thread stabbing flank 213, when the threaded connection 100 is viewed in a longitudinal cross-sectional view, the female thread load flank 214 is a straight line that is inclined such that the outer circumferential edge of the female thread load flank 214 is located at a position closer to the pipe end side of the box 20 than the inner circumferential edge of the female thread load flank 214. When the threaded connection 100 is viewed in a longitudinal cross-sectional view, the female thread load flank 214 may be a straight line that is inclined such that the outer circumferential edge of the female thread load flank 214 is located at a position closer to the inner depth side of the box 20 than the inner circumferential edge of the female thread load flank 214. The inclined angle of the female thread load flank 214 is substantially equal to the inclined angle of the male thread load flank 114. In the same manner as the male thread load flank 114, when the threaded connection 100 is viewed in a longitudinal cross-sectional view, the female thread load flank 214 may be a straight line perpendicular to the pipe axis X. In short, the female thread load flank 214 is parallel to the male thread load flank 114.

In this specification, in order to simply describe the nature of the technical idea being disclosed, it is described that each face that forms the thread part (the male thread part 11 or the female thread part 21) is a straight line when the threaded connection 100 is viewed in a cross-sectional view. This means that the main area of each face of the thread part is a straight line when the threaded connection 100 is viewed in a cross-sectional view. That is, a thread part in which an arc portion or a secondary chamfered portion is provided to a coupling portion between adjacent faces is also allowed as the thread part of the threaded connection 100.

Specifically, when the threaded connection 100 is viewed in a longitudinal cross-sectional view, the male thread stabbing flank 113 may be coupled to the male thread crest 111 via an arc portion, and may be coupled to the male thread root 112 via an arc portion. When the threaded connection 100 is viewed in a longitudinal cross-sectional view, the male thread load flank 114 may be coupled to the male thread crest 111 via an arc portion, and may be coupled to the male thread root 112 via an arc portion.

When the threaded connection 100 is viewed in a longitudinal cross-sectional view, the female thread stabbing flank 213 may be coupled to the female thread root 211 via an arc portion, and may be coupled to the female thread crest 212 via an arc portion. When the threaded connection 100 is viewed in a longitudinal cross-sectional view, the female thread load flank 214 may be coupled to the female thread root 211 via an arc portion, and may be coupled to the female thread crest 212 via an arc portion. For example, the radius of curvature of the arc portion that couples the female thread stabbing flank 213 to the female thread crest 212 is large compared with the radius of curvatures of other arc portions. Further, for example, a chamfered portion found as a straight line when viewed in a cross-sectional view may be provided between the female thread stabbing flank 213 and the female thread crest 212, and both ends of the chamfered portion may be coupled to the female thread stabbing flank 213 and the female thread crest 212 via arc portions.

Referring to FIG. 5, in a state in which making up between the pin 10 and the box 20 is completed due to screwing of the pin 10 into the box 20, the male thread part 11 is engaged with the female thread part 21. Specifically, the male thread root 112 comes into interference contact with the female thread crest 212, and the male thread load flank 114 comes into pressure contact with the female thread load flank 214. In contrast, in the made up state, the male thread crest 111 is in no contact with the female thread root 211, so that a gap is formed between the male thread crest 111 and the female thread root 211. In the made up state, the male thread stabbing flank 113 is also in no contact with the female thread stabbing flank 213, so that a gap is also formed between the male thread stabbing flank 113 and the female thread stabbing flank 213.

In the made up state, laminated coatings 14, 24 are interposed between the male thread root 112 and the female thread crest 212 that come into interference contact with each other. The laminated coatings 14, 24 are also interposed between the male thread load flank 114 and the female thread load flank 214 that come into pressure contact with each other. The laminated coatings 14, 24 are also present between the male thread crest 111 and the female thread root 211. The laminated coatings 14, 24 are also present between the male thread stabbing flank 113 and the female thread stabbing flank 213.

In the made up state, the pin sealing surface 12 comes into interference contact with the box sealing surface 22, thus forming a sealing part by metal-to-metal contact in coordination with the box sealing surface 22. The laminated coatings 14, 24 are interposed between the pin sealing surface 12 and the box sealing surface 22 that come into interference contact with each other.

In the made up state, the pin shoulder surface 13 comes into pressure contact with the box shoulder surface 23, thus forming a shoulder part in coordination with the box shoulder surface 23. During making up, the shoulder surfaces 13, 23 come into contact with each other due to screwing of the pin 10 into the box 20. The point in time of this contact is shouldering. Accordingly, the threaded connection 100 has a shouldering mechanism as a torque stop mechanism. In the made up state, the laminated coatings 14, 24 are interposed between the pin shoulder surface 13 and the box shoulder surface 23 that come into pressure contact with each other.

The female thread crest 212 and the male thread root 112 come into interference contact with each other substantially in the radial direction, thus being contact surfaces in the radial direction. The box sealing surface 22 and the pin sealing surface 12 come into interference contact with each other substantially in the radial direction, thus being contact surfaces in the radial direction. The female thread load flank 214 and the male thread load flank 114 come into pressure contact with each other substantially in the pipe axis direction, thus being contact surfaces in the pipe axis direction. The box shoulder surface 23 and the pin shoulder surface 13 come into pressure contact with each other substantially in the pipe axis direction, thus being contact surfaces in the pipe axis direction.

Referring to FIG. 6A, FIG. 6B, and FIG. 7, in an individual state before the pin 10 and the box 20 are made up to each other, the surface of the pin 10 is covered by the laminated coating 14 in a single form. In an individual state, the surface of the box 20 is covered by a laminated coating 24 in a single form. In this specification, a solid lubricating coating 16, 26 in a single form means that the solid lubricating coating 16, 26 is a solid lubricating coating of one kind. In other words, the solid lubricating coating 16, 26 is not a coating obtained by laminating solid lubricating coatings of multiple kinds.

The surface of the pin 10 that is covered by the laminated coating 14 includes at least the male thread part 11, the pin sealing surface 12, and the pin shoulder surface 13. Therefore, the male thread crest 111, the male thread root 112, the male thread stabbing flank 113, the male thread load flank 114, the pin sealing surface 12, and the pin shoulder surface 13 are covered by the laminated coating 14.

The surface of the box 20 that is covered by the laminated coating 24 includes at least the female thread part 21, the box sealing surface 22, and the box shoulder surface 23. Therefore, the female thread root 211, the female thread crest 212, the female thread stabbing flank 213, the female thread load flank 214, the box sealing surface 22, and the box shoulder surface 23 are covered by the laminated coating 24.

The laminated coating 14 that covers the surface of the pin 10 is formed of an undercoating 15 and the solid lubricating coating 16. Specifically, the surface of the pin 10 is covered by the undercoating 15, and the surface of the pin 10 that is covered by the undercoating 15 is further covered by the solid lubricating coating 16. That is, the undercoating 15 and the solid lubricating coating 16 are laminated on the surface of the pin 10 in this order. In the individual state, the undercoating 15 includes an alloy plating layer 151, and the solid lubricating coating 16 is formed on the alloy plating layer 151. In the present embodiment, the undercoating 15 is formed of the alloy plating layer 151.

The laminated coating 24 that covers the surface of the box 20 is formed of an undercoating 25 and a solid lubricating coating 26. Specifically, the surface of the box 20 is covered by the undercoating 25, and the surface of the box 20 that is covered by the undercoating 25 is further covered by the solid lubricating coating 26. That is, the undercoating 25 and the solid lubricating coating 26 are laminated on the surface of the box 20 in this order. In the individual state, the undercoating 25 includes an alloy plating layer 251, and the solid lubricating coating 26 is formed on the alloy plating layer 251. In the present embodiment, the undercoating 25 is formed of the alloy plating layer 251.

The solid lubricating coatings 16, 26 are polymer-based lubricating coatings. The solid lubricating coatings 16, 26 contain a resin and a solid lubricating powder. The resin is a substance that forms the base of the solid lubricating coatings 16, 26. Solid lubricating powder particles are dispersed in the resin. The solid lubricating coatings 16, 26 may further contain additives, such as an antislipping agent, a surfactant, or a rust inhibitor.

An example of the resin includes an epoxy resin. Instead of an epoxy resin, the resin may be a polyvinyl resin, an acrylic resin, a polyurethane resin, or a polyamide-imide resin, for example. Of these resins, particularly, epoxy resin, polyvinyl resin, and acrylic resin have excellent adhesiveness with the alloy plating layer 151, 251 included in the undercoating 15, 25. Particularly, polyurethane resin is chemically stable, thus can be easily handled. Particularly, polyamide-imide resin has excellent wear resistance.

An example of the solid lubricating powder is polytetrafluoroethylene (PTFE). Instead of PTFE, the solid lubricating powder may be molybdenum dithiocarbamate (MoDTC), molybdenum disulfide (MoS₂), carbon black (C), or graphite fluoride (CFx), for example, or may be a mixture of the above. Of these solid lubricating powders, PTFE exhibits stable friction coefficient under a high contact pressure, thus bringing about a good made up torque.

In the case in which PTFE is used as the solid lubricating powder, it is preferable that the average particle size of the solid lubricating powder be 10 µm or less. When the average particle size of the solid lubricating powder is more than 10 µm, solid lubricating powder particles are excessively large relative to the coating thickness of the solid lubricating coating 16, 26, so that the solid lubricating powder particles are ununiformly dispersed in the resin. When the solid lubricating powder particles are ununiformly dispersed in the resin, there is a risk that the solid lubricating coating 16, 26 is likely to fall off due to sliding, thus causing galling. It is more preferable that the average particle size of the solid lubricating powder be 5 µm or less.

In the solid lubricating coatings 16, 26, it is preferable to use, in combination, an epoxy resin as the resin and PTFE as the solid lubricating powder. In this case, it is preferable that a content of PTFE be 10 weight% or more and 25 weight% or less. The solid lubricating coatings 16, 26 may also be inorganic binder coatings.

The undercoating 15 on which the solid lubricating coating 16 is laminated includes the alloy plating layer 151, and the undercoating 25 on which the solid lubricating coating 26 is laminated includes the alloy plating layer 251. The alloy plating layers 151, 251 are Zn alloy plating layers, for example. The Zn alloy plating layer is a multi-component alloy plating that contains zinc (Zn) as the main element by weight, that is, the element with the largest percentage by weight, and contains 50 weight% or more of zinc. For example, the Zn alloy plating layer is a binary alloy plating that contains zinc and any one element selected from nickel, iron, magnesium, and manganese. The Zn alloy plating layer may also be a Ni-Zn binary alloy plating that contains 12 weight% or more and 18 weight% or less of nickel, and in which the microstructure is a single layer and is present in the γ layer. The Zn alloy plating layer may also be a ternary alloy plating that contains zinc and any two elements selected from nickel, iron, magnesium, manganese, copper, and tin.

The alloy plating layers 151, 251 may also be Cu alloy plating layers. The Cu alloy plating layer is a multi-component alloy plating that contains copper (Cu) as the main element by weight, that is, the element with the largest percentage by weight. The Cu alloy plating layer is, for example, a binary or ternary alloy plating that contains copper and any one or two elements selected from nickel, iron, magnesium, manganese, zinc, and tin.

The alloy plating layers 151, 251 can be easily formed by an immersion electroplating method, for example. With the immersion electroplating method, the alloy plating layers 151, 251 are homogeneously formed on the surfaces of target members, that is, the pin 10 and the box 20, with a substantially uniform coating thickness.

The coating thickness of the alloy plating layers 151, 251 is 4 µm or more and 20 µm or less, for example. When the coating thickness of the alloy plating layers 151, 251 is 4 µm or more, it is possible to obtain sufficient anticorrosion property. When the coating thickness of the alloy plating layers 151, 251 is 20 µm or less, it is possible to sufficiently suppress a decrease in adhesiveness with the surface of the pin 10 or the box 20 caused by increasing internal stress. The coating thickness of the alloy plating layers 151, 251 is more preferably 6 µm or more and 15 µm or less.

### (Coating thicknesses of laminated coatings 14, 24 and solid lubricating coatings 16, 26)

First, the coating thicknesses of the solid lubricating coatings 16, 26 will be described. Referring to FIG. 6B, in the box 20 in the individual state, a coating thickness tS214 of the solid lubricating coating 26 on the female thread load flank 214 is smaller than a coating thickness tS212 of the solid lubricating coating 26 on the female thread crest 212. The coating thickness tS214 of the solid lubricating coating 26 on the female thread load flank 214 refers to the thickness dimension, in the pipe axis direction, of the solid lubricating coating 26 formed on the female thread load flank 214. The coating thickness tS212 of the solid lubricating coating 26 on the female thread crest 212 refers to the thickness dimension, in the radial direction, of the solid lubricating coating 26 formed on the female thread crest 212.

In the box 20 in the individual state, a coating thickness tS22 of the solid lubricating coating 26 on the box sealing surface 22 is larger than the coating thickness tS214 of the solid lubricating coating 26 on the female thread load flank 214. The coating thickness tS22 of the solid lubricating coating 26 on the box sealing surface 22 refers to the thickness dimension, in the radial direction, of the solid lubricating coating 26 formed on the box sealing surface 22.

In this case, of the female thread load flank 214, the female thread crest 212, and the box sealing surface 22, the female thread load flank 214 (the coating thickness tS214) has the smallest coating thickness of the solid lubricating coating 26, and each of the female thread crest 212 (the coating thickness tS212) and the box sealing surface 22 (the coating thickness tS22) has a larger coating thickness of the solid lubricating coating 26 than the female thread load flank 214 (the coating thickness tS214). Therefore, the solid lubricating coating 26 has a relatively large coating thickness on the contact surfaces in the radial direction that are related to shouldering torque (the female thread crest 212, the box sealing surface 22), but the solid lubricating coating 26 has a relatively small coating thickness on the contact surface in the pipe axis direction that is related to apparent yield torque (the female thread load flank 214).

In the box 20 in the individual state, a coating thickness tS23 of the solid lubricating coating 26 on the box shoulder surface 23 is smaller than the coating thickness tS212 of the solid lubricating coating 26 on the female thread crest 212. The coating thickness tS23 of the solid lubricating coating 26 on the box shoulder surface 23 refers to the thickness dimension, in the pipe axis direction, of the solid lubricating coating 26 formed on the box shoulder surface 23. Further, the coating thickness tS23 of the solid lubricating coating 26 on the box shoulder surface 23 is smaller than the coating thickness tS22 of the solid lubricating coating 26 on the box sealing surface 22.

In this case, each of the female thread crest 212 (the coating thickness tS212) and the box sealing surface 22 (the coating thickness tS22) has a larger coating thickness of the solid lubricating coating 26 than the female thread load flank 214 (the coating thickness tS214) as described above and, in addition to the above, the box shoulder surface 23 (the coating thickness tS23) has a smaller coating thickness of the solid lubricating coating 26 than the female thread crest 212 (the coating thickness tS212). Further, the box shoulder surface 23 (the coating thickness tS23) has a smaller coating thickness of the solid lubricating coating 26 than the box sealing surface 22 (the coating thickness tS22). Therefore, the solid lubricating coating 26 has a relatively small coating thickness on the contact surfaces in the pipe axis direction that are related to apparent yield torque (the female thread load flank 214, the box shoulder surface 23).

Referring to FIG. 6A, in the pin 10 in the individual state, a coating thickness tS114 of the solid lubricating coating 16 on the male thread load flank 114 is smaller than a coating thickness tS112 of the solid lubricating coating 16 on the male thread root 112. The coating thickness tS114 of the solid lubricating coating 16 on the male thread load flank 114 refers to the thickness dimension, in the pipe axis direction, of the solid lubricating coating 16 formed on the male thread load flank 114. The coating thickness tS112 of the solid lubricating coating 16 on the male thread root 112 refers to the thickness dimension, in the radial direction, of the solid lubricating coating 16 formed on the male thread root 112.

In the pin 10 in the individual state, a coating thickness tS12 of the solid lubricating coating 16 on the pin sealing surface 12 is larger than the coating thickness tS114 of the solid lubricating coating 16 on the male thread load flank 114. The coating thickness tS12 of the solid lubricating coating 16 on the pin sealing surface 12 refers to the thickness dimension, in the radial direction, of the solid lubricating coating 16 formed on the pin sealing surface 12.

In this case, of the male thread load flank 114, the male thread root 112, and the pin sealing surface 12, the male thread load flank 114 (the coating thickness tS114) has the smallest coating thickness of the solid lubricating coating 16, and each of the male thread root 112 (the coating thickness tS112) and the pin sealing surface 12 (the coating thickness tS12) has a larger coating thickness of the solid lubricating coating 16 than the male thread load flank 114 (the coating thickness tS114). Therefore, the solid lubricating coating 16 has a relatively large coating thickness on the contact surfaces in the radial direction that are related to shouldering torque (the male thread root 112, the pin sealing surface 12), but the solid lubricating coating 16 has a relatively small coating thickness on the contact surface in the pipe axis direction that is related to apparent yield torque (the male thread load flank 114).

In the pin 10 in the individual state, a coating thickness tS13 of the solid lubricating coating 16 on the pin shoulder surface 13 is smaller than the coating thickness tS112 of the solid lubricating coating 16 on the male thread root 112. The coating thickness tS13 of the solid lubricating coating 16 on the pin shoulder surface 13 refers to the thickness dimension, in the pipe axis direction, of the solid lubricating coating 16 formed on the pin shoulder surface 13. Further, the coating thickness tS13 of the solid lubricating coating 16 on the pin shoulder surface 13 is smaller than the coating thickness tS12 of the solid lubricating coating 16 on the pin sealing surface 12.

In this case, each of the male thread root 112 (the coating thickness tS112) and the pin sealing surface 12 (the coating thickness tS12) has a larger coating thickness of the solid lubricating coating 16 than the male thread load flank 114 (the coating thickness tS114) as described above and, in addition to the above, the pin shoulder surface 13 (the coating thickness tS13) has a smaller coating thickness of the solid lubricating coating 16 than the male thread root 112 (the coating thickness tS112). Further, the pin shoulder surface 13 (the coating thickness tS13) has a smaller coating thickness of the solid lubricating coating 16 than the pin sealing surface 12 (the coating thickness tS12). Therefore, the solid lubricating coating 16 has a relatively small coating thickness on the contact surfaces in the pipe axis direction that are related to apparent yield torque (the male thread load flank 114, the pin shoulder surface 13).

Next, the coating thicknesses of the laminated coating 14, 24 (the undercoating 15, 25 and the solid lubricating coating 16, 26) will be described. Referring to FIG. 6A and FIG. 6B, a coating thickness tL211 of the laminated coating 24 on the female thread root 211 is taken as a first coating thickness tL211. A coating thickness tL111 of the laminated coating 14 on the male thread crest 111 is taken as a second coating thickness tL111. A coating thickness tL212 of the laminated coating 24 on the female thread crest 212 is taken as a third coating thickness tL212. A coating thickness tL112 of the laminated coating 14 on the male thread root 112 is taken as a fourth coating thickness tL112. The first coating thickness tL211 is a total coating thickness of the solid lubricating coating 26 and the undercoating 25 that are formed on the female thread root 211. The second coating thickness tL111 is a total coating thickness of the solid lubricating coating 16 and the undercoating 15 that are formed on the male thread crest 111. The third coating thickness tL212 is a total coating thickness of the solid lubricating coating 26 and the undercoating 25 that are formed on the female thread crest 212. The fourth coating thickness tL112 is a total coating thickness of the solid lubricating coating 16 and the undercoating 15 that are formed on the male thread root 112. Each of the first coating thickness tL211, the second coating thickness tL111, the third coating thickness tL212, and the fourth coating thickness tL112 is the thickness dimension of the laminated coating 14, 24 in the radial direction.

Regarding the first coating thickness tL211, the second coating thickness tL111, the third coating thickness tL212, and the fourth coating thickness tL112, a first index is defined that is expressed by the value obtained by subtracting the sum total of the third coating thickness tL212 and the fourth coating thickness tL112 from the sum total of the first coating thickness tL211 and the second coating thickness tL111. With respect to the first index, the sum total of the first coating thickness tL211 and the second coating thickness tL111 is the coating thickness of the entire of the laminated coatings 14, 24 that are present between the female thread root 211 and the male thread crest 111 in the made up state, and the sum total of the third coating thickness tL212 and the fourth coating thickness tL112 is the coating thickness of the entire of the laminated coatings 14, 24 that are interposed between the female thread crest 212 and the male thread root 112 in the made up state.

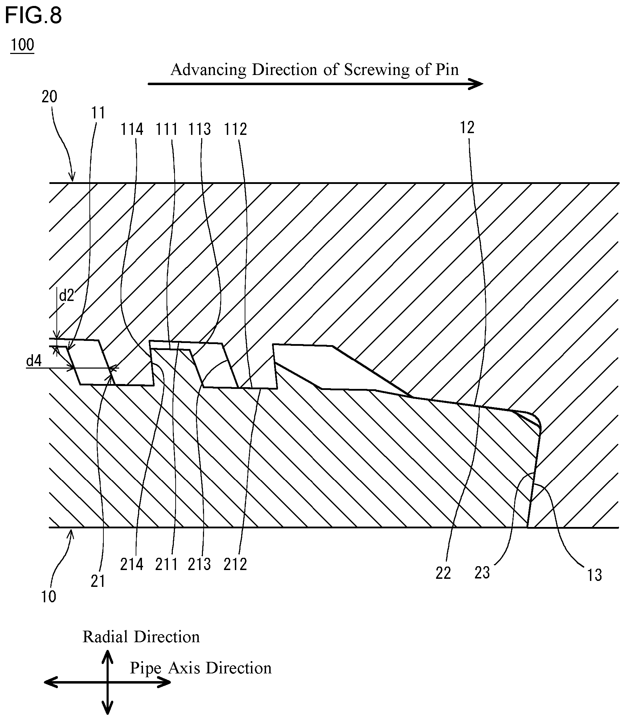

FIG. 8 is a longitudinal cross-sectional view showing the threaded connection 100 shown in FIG. 5 in the made up state in the case that assumes that the pin 10 includes no laminated coating 14 (the undercoating 15 and the solid lubricating coating 16) and the box 20 includes no laminated coating 24 (the undercoating 25 and the solid lubricating coating 26). In other words, FIG. 8 shows a state in which making up between the box 20 including no laminated coating 24 and the pin 10 including no laminated coating 14 is completed, so that the male thread root 112 is in direct interference contact with the female thread crest 212, and the male thread load flank 114 is in direct pressure contact with the female thread load flank 214.

Referring to FIG. 8, a second index is defined that is expressed by a distance d2 between the male thread crest 111 and the female thread root 211 in the made up state. The second index expressed by the distance d2 corresponds to a separation (gap) in the radial direction between the male thread crest 111 and the female thread root 211 in the made up state in the case that assumes that the box 20 includes no laminated coating 24 and the pin 10 includes no laminated coating 14.

Returning to FIG. 6A and FIG. 6B, the first coating thickness tL211, the second coating thickness tL111, the third coating thickness tL212, and the fourth coating thickness tL112 are set such that the first index is smaller than the second index (the distance d2). That is, regarding the dimension of the threaded connection 100 in the radial direction, the coating thicknesses tL211, tL212 of the laminated coating 24 formed on the female thread part 21 and the coating thicknesses tL111, tL112 of the laminated coating 14 formed on the male thread part 11 satisfy the condition that the first index is smaller than the second index.

A coating thickness tL214 of the laminated coating 24 on the female thread load flank 214 is taken as a fifth coating thickness tL214. A coating thickness tL114 of the laminated coating 14 on the male thread load flank 114 is taken as a sixth coating thickness tL114. A coating thickness tL213 of the laminated coating 24 on the female thread stabbing flank 213 is taken as a seventh coating thickness tL213. A coating thickness tL113 of the laminated coating 14 on the male thread stabbing flank 113 is taken as an eighth coating thickness tL113. The fifth coating thickness tL214 is a total coating thickness of the solid lubricating coating 26 and the undercoating 25 that are formed on the female thread load flank 214. The sixth coating thickness tL114 is a total coating thickness of the solid lubricating coating 16 and the undercoating 15 that are formed on the male thread load flank 114. The seventh coating thickness tL213 is a total coating thickness of the solid lubricating coating 26 and the undercoating 25 that are formed on the female thread stabbing flank 213. The eighth coating thickness tL113 is a total coating thickness of the solid lubricating coating 16 and the undercoating 15 that are formed on the male thread stabbing flank 113. Each of the fifth coating thickness tL214, the sixth coating thickness tL114, the seventh coating thickness tL213, and the eighth coating thickness tL113 is the thickness dimension of the laminated coating 14, 24 in the pipe axis direction.

Regarding the fifth coating thickness tL214, the sixth coating thickness tL114, the seventh coating thickness tL213, and the eighth coating thickness tL113, a third index is defined that is expressed by the total value of the fifth coating thickness tL214, the sixth coating thickness tL114, the seventh coating thickness tL213, and the eighth coating thickness tL113. With respect to the third index, the sum total of the fifth coating thickness tL214 and the sixth coating thickness tL114 is the coating thickness of the entire of the laminated coatings 14, 24 that are interposed between the female thread load flank 214 and the male thread load flank 114, and the sum total of the seventh coating thickness tL213 and the eighth coating thickness tL113 is the coating thickness of the entire of the laminated coatings 14, 24 that are present between the female thread stabbing flank 213 and the male thread stabbing flank 113.

Referring to FIG. 8, a fourth index is defined that is expressed by a distance d4 between the male thread stabbing flank 113 and the female thread stabbing flank 213 in the made up state. The fourth index expressed by the distance d4 corresponds to a separation (gap) in the pipe axis direction between the male thread stabbing flank 113 and the female thread stabbing flank 213 in the made up state in the case that assumes that the box 20 includes no laminated coating 24 and the pin 10 includes no laminated coating 14.

Returning to FIG. 6A and FIG. 6B, the fifth coating thickness tL214, the sixth coating thickness tL114, the seventh coating thickness tL213, and the eighth coating thickness tL113 are set such that the third index is smaller than the fourth index (the distance d4). That is, regarding the dimension of the threaded connection 100 in the pipe axis direction, the coating thicknesses tL214, tL213 of the laminated coating 24 formed on the female thread part 21 and the coating thicknesses tL114, tL113 of the laminated coating 14 formed on the male thread part 11 satisfy the condition that the third index is smaller than the fourth index.

In the case in which the solid lubricating coating 16, 26 is, for example, a coating in which fluorine-based solid lubricating powder particles are dispersed in an epoxy resin, the coating thickness of the solid lubricating coating 16, 26 may be set to 5 µm or more and 50 µm or less, although this depends on the components of the coating. In this case, it is more preferable that the coating thickness be 10 µm or more and 40 µm or less.

In the female thread part 21 of the box 20, it is sufficient that the coating thickness tS212 of the solid lubricating coating 26 on the female thread crest 212 be 25 µm or more and 50 µm or less, for example. It is more preferable that the coating thickness tS212 be 25 µm or more and 40 µm or less. It is sufficient that the coating thickness tS214 of the solid lubricating coating 26 on the female thread load flank 214 be 5 µm or more and 25 µm or less, for example, and be smaller than the coating thickness tS212 on the female thread crest 212. It is more preferable that the coating thickness tS214 be 10 µm or more and 25 µm or less. In the case in which the solid lubricating coating 26 is applied by spraying, for example, the coating thickness tS212 on the female thread crest 212 is usually 1.5 times or more of the coating thickness tS214 on the female thread load flank 214, although this depends on the method for forming the solid lubricating coating 26.

In the male thread part 11 of the pin 10, it is sufficient that the coating thickness tS112 of the solid lubricating coating 16 on the male thread root 112 be 25 µm or more and 50 µm or less, for example. It is more preferable that the coating thickness tS112 be 25 µm or more and 40 µm or less. It is sufficient that the coating thickness tS114 of the solid lubricating coating 16 on the male thread load flank 114 be 5 µm or more and 25 µm or less, for example, and be smaller than the coating thickness tS112 on the male thread root 112. It is more preferable that the coating thickness tS114 be 10 µm or more and 25 µm or less. In the case in which the solid lubricating coating 16 is applied by spraying, for example, the coating thickness tS112 on the male thread root 112 is usually 1.5 times or more of the coating thickness tS114 on the male thread load flank 114, although this depends on the method for forming the solid lubricating coating 16.

In the present embodiment, the solid lubricating coating 16 is provided to the pin 10, and the solid lubricating coating 26 is provided to the box 20. In this case, it is preferable to limit the coating thickness tS212 on the female thread crest 212 and the coating thickness tS112 on the male thread root 112 to 35 µm or less. The reason for the above is described below. The male thread root 112 comes into interference contact with the female thread crest 212 and hence, in the course of making up, the solid lubricating coatings 16, 26 slide along each other between the male thread root 112 and the female thread crest 212. Due to such sliding, the solid lubricating coatings 16, 26 adhere to each other, and the adhesion portions are likely to fall off. These adhesion pieces that are caused to fall off may enter between the male thread load flank 114 and the female thread load flank 214 or between the male thread stabbing flank 113 and the female thread stabbing flank 213, thus causing abnormal fluctuations in the torque chart.

As described above, in the box 20, each of the female thread crest 212 (the coating thickness tS212) and the box sealing surface 22 (the coating thickness tS22) has a larger coating thickness of the solid lubricating coating 26 than the female thread load flank 214 (the coating thickness tS214). That is, the coating thickness tS22 of the solid lubricating coating 26 on the box sealing surface 22 is larger than the coating thickness tS214 of the solid lubricating coating 26 on the female thread load flank 214. Both the box sealing surface 22 and the female thread crest 212 are the contact surfaces in the radial direction and hence, the coating thickness tS22 is equal to the coating thickness tS212 of the solid lubricating coating 26 on the female thread crest 212, for example. It is sufficient that the coating thickness tS22 on the box sealing surface 22 be 25 µm or more and 50 µm or less, for example. It is more preferable that the coating thickness tS22 be 25 µm or more and 40 µm or less.

As described above, in the pin 10, each of the male thread root 112 (the coating thickness tS112) and the pin sealing surface 12 (the coating thickness tS12) has a larger coating thickness of the solid lubricating coating 16 than the male thread load flank 114 (the coating thickness tS114). That is, the coating thickness tS12 of the solid lubricating coating 16 on the pin sealing surface 12 is larger than the coating thickness tS114 of the solid lubricating coating 16 on the male thread load flank 114. Both the pin sealing surface 12 and the male thread root 112 are the contact surfaces in the radial direction and hence, the coating thickness tS12 is equal to the coating thickness tS112 of the solid lubricating coating 16 on the male thread root 112, for example. It is sufficient that the coating thickness tS12 on the pin sealing surface 12 be 25 µm or more and 50 µm or less, for example. It is more preferable that the coating thickness tS12 be 25 µm or more and 40 µm or less.

In the box 20, it is sufficient that the coating thickness tS23 of the solid lubricating coating 26 on the box shoulder surface 23 be 5 µm or more and 50 µm or less, for example. It is more preferable that the coating thickness tS23 be 5 µm or more and 40 µm or less. Both the box shoulder surface 23 and the female thread load flank 214 are the contact surfaces in the pipe axis direction and hence, it is preferable to set the coating thickness tS23 to be substantially equal to the coating thickness tS214 on the female thread load flank 214. For example, the coating thickness tS23 on the box shoulder surface 23 is preferably 5 µm or more and 30 µm or less, and is more preferably 10 µm or more and 30 µm or less.

In the pin 10, it is sufficient that the coating thickness tS13 of the solid lubricating coating 16 on the pin shoulder surface 13 be 5 µm or more and 50 µm or less, for example. It is more preferable that the coating thickness tS13 be 5 µm or more and 40 µm or less. Both the pin shoulder surface 13 and the male thread load flank 114 are the contact surfaces in the pipe axis direction and hence, it is preferable to set the coating thickness tS13 to be substantially equal to the coating thickness tS114 on the male thread load flank 114. For example, the coating thickness tS13 on the pin shoulder surface 13 is preferably 5 µm or more and 30 µm or less, and is more preferably 10 µm or more and 30 µm or less.

### (Method for forming solid lubricating coating 16, 26)

The threaded connection 100 includes the solid lubricating coatings 16, 26 each having appropriate coating thicknesses corresponding to respective regions. Such a solid lubricating coating 16, 26 can be industrially formed by performing application by using a spray nozzle. Specifically, a solvent is mixed into the composition of the solid lubricating coating 16, 26 to prepare a coating composition having flowability and adjusted viscosity. This coating composition is sprayed on a target member on which the undercoating 15, 25 is formed, that is, on the pin 10 or the box 20. The coating composition applied to the target member by spraying is solidified by heating, heat removal, or air drying, for example. With such operations, the solid lubricating coating 16, 26 is formed on the surface of the target member.

In the case of providing the solid lubricating coating 16 to the pin 10, in the male thread part 11, it is necessary to cause the male thread root 112 to have a large coating thickness tS112, and to cause the male thread load flank 114 to have a small coating thickness tS114. In this case, for example, the coating composition is applied in a state in which the spray angle of the spray nozzle is throttled down and the spray nozzle is disposed close to the male thread root 112. In performing such an operation, feeding of the spray nozzle with respect to the pin 10 is adjusted in the circumferential direction and in the pipe axis direction such that the spray nozzle moves along the lead (helix) of the thread. With such operations, the coating composition is preferentially applied to the male thread root 112. With such an operation, the solid lubricating coating 16 having a large coating thickness tS112 is formed on the male thread root 112, and the solid lubricating coating 16 having a small coating thickness tS114 is formed on the male thread load flank 114.

In the case of providing the solid lubricating coating 26 to the box 20, in the female thread part 21, it is necessary to cause the female thread crest 212 to have a large coating thickness tS212, and to cause the female thread load flank 214 to have a small coating thickness tS214. In this case, for example, when the coating composition is sprayed on the female thread part 21, the coating composition sprayed on the area of the female thread crest 212 directly adheres to the female thread crest 212, and the coating composition sprayed on the area of the female thread root 211 is distributed to the female thread root 211, the female thread load flank 214, and the female thread stabbing flank 213. Therefore, the solid lubricating coating 26 on the female thread crest 212 is likely to have a large coating thickness tS212, and the solid lubricating coating 26 on the female thread load flank 214 is likely to have a small coating thickness tS214. Consequently, the solid lubricating coating 26 having a large coating thickness tS212 is formed on the female thread crest 212, and the solid lubricating coating 26 having a small coating thickness tS214 is formed on the female thread load flank 214. In the case of providing the solid lubricating coating 26 to the box 20 as described above, it is possible to form the solid lubricating coating 26 having appropriate coating thicknesses in required regions more easily compared with the case in which the solid lubricating coating 16 is provided to the pin 10.

In the case of providing the solid lubricating coating 16 to the pin 10, it is necessary to set the coating thickness tS12 on the pin sealing surface 12 to a large value in the same manner as the coating thickness tS112 on the male thread root 112. In contrast, it is necessary to set the coating thickness tS13 on the pin shoulder surface 13 to a small value in the same manner as the coating thickness tS114 on the male thread load flank 114. Although the pin sealing surface 12 is proximate to the pin shoulder surface 13, there is an angle difference of approximately 90° between the pin sealing surface 12 and the pin shoulder surface 13. For this reason, when the coating composition is sprayed mainly toward the pin sealing surface 12, the solid lubricating coating 16 having a large coating thickness tS12 is spontaneously formed on the pin sealing surface 12, and the solid lubricating coating 16 having a small coating thickness tS13 is spontaneously formed on the pin shoulder surface 13.

In the case of providing the solid lubricating coating 26 to the box 20, it is necessary to set the coating thickness tS22 on the box sealing surface 22 to a large value in the same manner as the coating thickness tS212 on the female thread crest 212. In contrast, it is necessary to set the coating thickness tS23 on the box shoulder surface 23 to a small value in the same manner as the coating thickness tS214 on the female thread load flank 214. Although the box sealing surface 22 is proximate to the box shoulder surface 23, there is an angle difference of approximately 90° between the box sealing surface 22 and the box shoulder surface 23. For this reason, when the coating composition is sprayed mainly toward the box sealing surface 22, the solid lubricating coating 26 having a large coating thickness tS22 is spontaneously formed on the box sealing surface 22, and the solid lubricating coating 26 having a small coating thickness tS23 is spontaneously formed on the box shoulder surface 23.

### [Advantageous effect]

In the threaded connection 100 according to the present embodiment, the surface of the box 20 is covered by the undercoating 25 that includes the alloy plating layer 251, and the surface covered by the undercoating 25 is covered by the solid lubricating coating 26 in a single form. The surface of the pin 10 is covered by the undercoating 15 that includes the alloy plating layer 151, and the surface covered by the undercoating 15 is covered by the solid lubricating coating 16 in a single form. That is, the laminated coating 24, in which the undercoating 25 and the solid lubricating coating 26 in a single form are laminated in this order, is formed on the surface of the box 20, and the laminated coating 14, in which the undercoating 15 and the solid lubricating coating 16 in a single form are laminated in this order, is formed on the surface of the pin 10. The undercoating 15, 25 that includes the alloy plating layer 151, 251 increases adhesiveness between the solid lubricating coating 16, 26 and the surface of the box 20 or the pin 10 to which the solid lubricating coating 16, 26 is provided.

In the threaded connection 100 according to the present embodiment, in the made up state, the pin sealing surface 12 comes into interference contact with the box sealing surface 22, and the laminated coatings 14, 24 are interposed between the pin sealing surface 12 and the box sealing surface 22 that come into interference contact with each other. In the made up state, the male thread root 112 comes into interference contact with the female thread crest 212, and the laminated coatings 14, 24 are also interposed between the male thread root 112 and the female thread crest 212 that come into interference contact with each other. In the made up state, the male thread load flank 114 comes into pressure contact with the female thread load flank 214, and the laminated coatings 14, 24 are also interposed between the male thread load flank 114 and the female thread load flank 214 that come into pressure contact with each other.

In addition to the above, in the individual state, in the box 20, of the female thread load flank 214, the female thread crest 212, and the box sealing surface 22, the female thread load flank 214 has the smallest coating thickness of the solid lubricating coating 26, and each of the female thread crest 212 and the box sealing surface 22 has a larger coating thickness of the solid lubricating coating 26 than the female thread load flank 214. In the pin 10, of the male thread load flank 114, the male thread root 112, and the pin sealing surface 12, the male thread load flank 114 has the smallest coating thickness of the solid lubricating coating 16, and each of the male thread root 112 and the pin sealing surface 12 has a larger coating thickness of the solid lubricating coating 16 than the male thread load flank 114. Therefore, the solid lubricating coatings 16, 26 have a relatively large coating thickness on the contact surfaces in the radial direction that are related to shouldering torque (the female thread crest 212 and the male thread root 112, and the box sealing surface 22 and the pin sealing surface 12), but the solid lubricating coatings 16, 26 have a relatively small coating thickness on the contact surfaces in the pipe axis direction that are related to apparent yield torque (the female thread load flank 214 and the male thread load flank 114).

The solid lubricating coating 16, 26 has a relatively large coating thickness on the contact surfaces in the radial direction that are related to shouldering torque and hence, it is possible to ensure good lubricity. As a result, a low shouldering torque appears in the torque chart. Further, the solid lubricating coating 16, 26 has a relatively small coating thickness on the contact surfaces in the pipe axis direction that are related to apparent yield torque and hence, it is possible to reduce the impact caused by reduction in rigidity of the solid lubricating coating 16, 26. As a result, occurrence of an apparent yield torque is suppressed, and a high yield torque appears in the torque chart. As described above, it is possible to achieve suitable coating thicknesses of the solid lubricating coating 16, 26 in the respective regions of the threaded connection 100, and to achieve a low shouldering torque and a high yield torque. A low shouldering torque and a high yield torque allow an expanded torque window. Further, the solid lubricating coating 16, 26 in a single form is used and hence, compared with the case in which two kinds of solid lubricating coating are used, the solid lubricating coating 16, 26 can be easily supplied and controlled, and the solid lubricating coating 16, 26 has a simple configuration. Accordingly, according to the threaded connection 100 according to the present embodiment, it is possible to expand the torque window with a simple and inexpensive configuration.

In the threaded connection 100 according to the present embodiment, regarding the first coating thickness tL211 (the coating thickness of the laminated coating 24 on the female thread root 211), the second coating thickness tL111 (the coating thickness of the laminated coating 14 on the male thread crest 111), the third coating thickness tL212 (the coating thickness of the laminated coating 24 on the female thread crest 212), and the fourth coating thickness tL112 (the coating thickness of the laminated coating 14 on the male thread root 112), the first index is smaller than the second index. The first index is expressed by the value obtained by subtracting the sum total of the third coating thickness tL212 and the fourth coating thickness tL112 from the sum total of the first coating thickness tL211 and the second coating thickness tL111. The second index is expressed by the distance d2 between the male thread crest 111 and the female thread root 211 in the made up state in the case that assumes that the box 20 includes no laminated coating 24 and the pin 10 includes no laminated coating 14.

The first index is smaller than the second index and hence, in performing a making up operation, a situation does not occur in which the surface of one solid lubricating coating 16 comes into contact with the surface of the other solid lubricating coating 26, between the male thread crest 111 and the female thread root 211. Accordingly, it is possible to prevent a making up trouble in advance and, particularly, it is possible to prevent narrowing of the torque window by causing the shouldering torque to stabilize at a low position.

In the present embodiment, in the made up state, the pin shoulder surface 13 comes into pressure contact with the box shoulder surface 23, and the laminated coatings 14, 24 are interposed between the pin shoulder surface 13 and the box shoulder surface 23 that come into pressure contact with each other. In the individual state, in the box 20, each of the female thread crest 212 and the box sealing surface 22 has a larger coating thickness of the solid lubricating coating 26 than the female thread load flank 214 and, in addition to the above, the box shoulder surface 23 has a smaller coating thickness of the solid lubricating coating 26 than the female thread crest 212. Further, the box shoulder surface 23 has a smaller coating thickness of the solid lubricating coating 26 than the box sealing surface 22. In the pin 10, each of the male thread root 112 and the pin sealing surface 12 has a larger coating thickness of the solid lubricating coating 16 than the male thread load flank 114 and, in addition to the above, the pin shoulder surface 13 has a smaller coating thickness of the solid lubricating coating 16 than the male thread root 112. Further, the pin shoulder surface 13 has a smaller coating thickness of the solid lubricating coating 16 than the pin sealing surface 12. Therefore, the solid lubricating coatings 16, 26 have a relatively small coating thickness on the contact surfaces in the pipe axis direction that are related to apparent yield torque (the female thread load flank 214 and the male thread load flank 114, the box shoulder surface 23 and the pin shoulder surface 13). In this manner, the solid lubricating coatings 16, 26 have a relatively small coating thickness on the contact surfaces in the pipe axis direction that are related to apparent yield torque and hence, a high yield torque appears in the torque chart as described above.

In the threaded connection 100 according to the present embodiment, regarding the fifth coating thickness tL214 (the coating thickness of the laminated coating 24 on the female thread load flank 214), the sixth coating thickness tL114 (the coating thickness of the laminated coating 14 on the male thread load flank 114), the seventh coating thickness tL213 (the coating thickness of the laminated coating 24 on the female thread stabbing flank 213), and the eighth coating thickness tL113 (the coating thickness of the laminated coating 14 on the male thread stabbing flank 113), the third index is smaller than the fourth index. The third index is expressed by the total value of the fifth coating thickness tL214, the sixth coating thickness tL114, the seventh coating thickness tL213, and the eighth coating thickness tL113. The fourth index is expressed by the distance d4 between the male thread stabbing flank 113 and the female thread stabbing flank 213 in the made up state in the case that assumes that the box 20 includes no laminated coating 24 and the pin 10 includes no laminated coating 14.

The third index is smaller than the fourth index and hence, there is no possibility that contact sliding occurs both between the load flanks 114, 214 and between the stabbing flanks 113, 213 at the stage in which the male thread root 112 and the female thread crest 212 slide along each other while coming into interference contact. Accordingly, a rise in torque resistance can be suppressed, thus suppressing a rise in shouldering torque and, as a result, it is possible to prevent narrowing of the torque window.

In the threaded connection 100 according to the present embodiment, the alloy plating layer 151, 251 included in the undercoating 15, 25 contributes to galling resistance and rust preventing property. It is preferable to adopt a Zn alloy plating layer for the alloy plating layer 151, 251. If a pure zinc plating layer is adopted, zinc is consumed at high speed due to sacrificial corrosion and hence, the pure zinc plating layer necessarily has a large plating thickness. When the plating thickness is large, the necessary gap formed between the male thread part 11 and the female thread part 21 is reduced, and undue interference occurs in some cases. Consequently, a high torque may become necessary or galling may occur during making up. When a Zn alloy plating layer is adopted for the alloy plating layer 151, 251, it is possible to prevent occurrence of such a situation.

### (Modification 1)

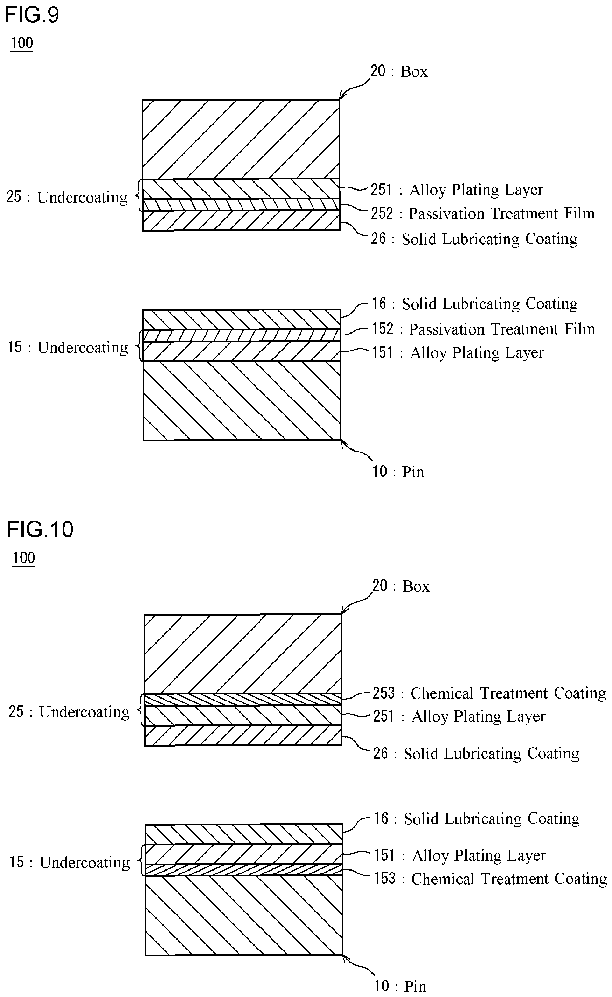

A modification 1 of the threaded connection 100 according to the first embodiment will be described with reference to FIG. 9. FIG. 9 is a schematic view showing the near-surface portions of the pin 10 and the box 20 in an individual state to describe the modification 1 of the threaded connection 100. In the modification 1, the undercoating 15 that covers the surface of the pin 10 further includes a passivation treatment film 152. That is, the undercoating 15 is formed of the alloy plating layer 151 and the passivation treatment film 152. Specifically, the alloy plating layer 151 is formed on the base metal surface of the pin 10, and the passivation treatment film 152 is formed on the alloy plating layer 151. The solid lubricating coating 16 is formed on the passivation treatment film 152. In short, the passivation treatment film 152 is formed between the alloy plating layer 151 and the solid lubricating coating 16 in the pin 10.

In the modification 1, the undercoating 25 that covers the surface of the box 20 further includes a passivation treatment film 252. That is, the undercoating 25 is formed of the alloy plating layer 251 and the passivation treatment film 252. Specifically, the alloy plating layer 251 is formed on the base metal surface of the box 20, and the passivation treatment film 252 is formed on the alloy plating layer 251. The solid lubricating coating 26 is formed on the passivation treatment film 252. In short, the passivation treatment film 252 is formed between the alloy plating layer 251 and the solid lubricating coating 26 in the box 20.

The passivation treatment film 152, 252 contains trivalent chromium (Cr (III)), for example. Trivalent chromium is more stable than Cr (II), and is preferable in that it is unharmful unlike Cr (VI).

In the modification 1, the passivation treatment films 152, 252 serve as passivation layers. The passivation treatment film 152 improves corrosion resistance of the alloy plating layer 151 in the pin 10 to which the solid lubricating coating 16 is provided. The passivation treatment film 252 improves corrosion resistance of the alloy plating layer 251 in the box 20 to which the solid lubricating coating 26 is provided.

In the modification 1, a barrier layer (not shown in the drawing) may be formed on the passivation treatment film 152, 252, and the solid lubricating coating 16, 26 may be formed on the barrier layer. The barrier layer is, for example, an inorganic matrix layer or an organic-inorganic matrix layer that contains silicon dioxide (SiO₂) particles. Corrosion resistance is further improved by the barrier layer.

### (Modification 2)

A modification 2 of the threaded connection 100 according to the first embodiment will be described with reference to FIG. 7 and FIG. 9. In the modification 2, unevenness (not shown in the drawing) is formed on the base metal surface of the pin 10, on which the undercoating 15 is formed, by performing blasting process. Unevenness (not shown in the drawing) is also formed on the base metal surface of the box 20, on which the undercoating 25 is formed, by performing blasting process. Sandblasting or shot peening, for example, may be used for the blasting process. In this case, in the pin 10, the unevenness increases adhesiveness between the surface of the pin 10 and the undercoating 15 (the alloy plating layer 151), and the surface of the undercoating 15 also has unevenness and hence, adhesiveness between the solid lubricating coating 16 and the undercoating 15 also increases. In the box 20, the unevenness increases adhesiveness between the surface of the box 20 and the undercoating 25 (the alloy plating layer 251), and the surface of the undercoating 25 also has unevenness and hence, adhesiveness between the solid lubricating coating 26 and the undercoating 25 also increases.

### (Modification 3)

A modification 3 of the threaded connection 100 according to the first embodiment will be described with reference to FIG. 10. FIG. 10 is a schematic view showing the near-surface portions of the pin 10 and the box 20 in an individual state to describe the modification 3 of the threaded connection 100. In the modification 3, the undercoating 15 that covers the surface of the pin 10 further includes a chemical treatment coating 153. That is, the undercoating 15 is formed of the chemical treatment coating 153 and the alloy plating layer 151. Specifically, the base metal surface of the pin 10 is covered by the chemical treatment coating 153, and the alloy plating layer 151 is formed on the chemical treatment coating 153. The solid lubricating coating 16 is formed on the alloy plating layer 151. In short, the chemical treatment coating 153 is formed between the base metal surface of the pin 10 and the alloy plating layer 151. The chemical treatment coating 153 is formed by performing chemical treatment with zinc phosphate or manganese phosphate, for example, on the base metal surface of the pin 10.

In the modification 3, the undercoating 25 that covers the surface of the box 20 further includes a chemical treatment coating 253. That is, the undercoating 25 is formed of the chemical treatment coating 253 and the alloy plating layer 251. Specifically, the base metal surface of the box 20 is covered by the chemical treatment coating 253, and the alloy plating layer 251 is formed on the chemical treatment coating 253. The solid lubricating coating 26 is formed on the alloy plating layer 251. In short, the chemical treatment coating 253 is formed between the base metal surface of the box 20 and the alloy plating layer 251. The chemical treatment coating 253 is formed by performing chemical treatment with zinc phosphate or manganese phosphate, for example, on the base metal surface of the box 20 in the same manner as the treatment performed to form the chemical treatment coating 153 on the pin 10.

In the modification 3, the chemical treatment coating 153 increases adhesiveness between the surface of the pin 10 and the undercoating 15 (the alloy plating layer 151). The chemical treatment coating 253 increases adhesiveness between the surface of the box 20 and the undercoating 25 (the alloy plating layer 251).

### (Modification 4)

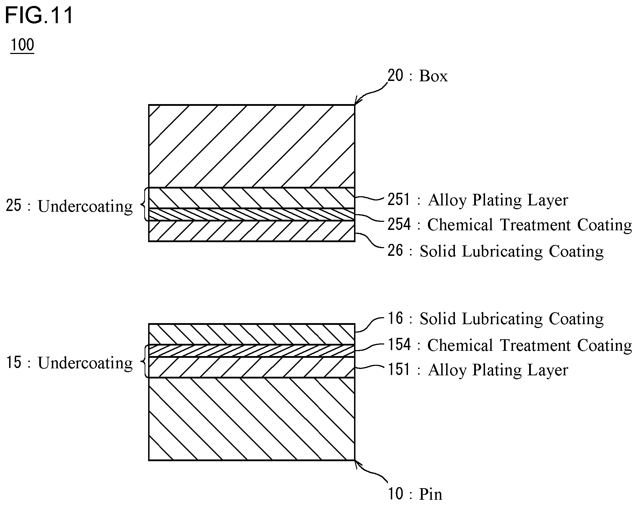

A modification 4 of the threaded connection 100 according to the first embodiment will be described with reference to FIG. 11. FIG. 11 is a schematic view showing the near-surface portions of the pin 10 and the box 20 in an individual state to describe the modification 4 of the threaded connection 100. In the modification 4, the undercoating 15 that covers the surface of the pin 10 further includes a chemical treatment coating 154. That is, the undercoating 15 is formed of the alloy plating layer 151 and the chemical treatment coating 154. Specifically, the base metal surface of the pin 10 is covered by the alloy plating layer 151, and the chemical treatment coating 154 is formed on the alloy plating layer 151. The solid lubricating coating 16 is formed on the chemical treatment coating 154. In short, the chemical treatment coating 154 is formed between the alloy plating layer 151 and the solid lubricating coating 16 in the pin 10. The chemical treatment coating 154 is formed by performing chemical treatment with zinc phosphate or manganese phosphate, for example, on the surface of the alloy plating layer 151.

In the modification 4, the undercoating 25 that covers the surface of the box 20 further includes a chemical treatment coating 254. That is, the undercoating 25 is formed of the alloy plating layer 251 and the chemical treatment coating 254. Specifically, the base metal surface of the box 20 is covered by the alloy plating layer 251, and the chemical treatment coating 254 is formed on the alloy plating layer 251. The solid lubricating coating 26 is formed on the chemical treatment coating 254. In short, the chemical treatment coating 254 is formed between the alloy plating layer 251 and the solid lubricating coating 26 in the box 20. The chemical treatment coating 254 is formed by performing chemical treatment with zinc phosphate or manganese phosphate, for example, on the surface of the alloy plating layer 251 in the same manner as the treatment performed to form the chemical treatment coating 154 on the pin 10.

In the modification 4, the chemical treatment coating 154 increases adhesiveness between the undercoating 15 (the alloy plating layer 151) and the solid lubricating coating 16 in the pin 10. The chemical treatment coating 254 increases adhesiveness between the undercoating 25 (the alloy plating layer 251) and the solid lubricating coating 26 in the box 20.

In the threaded connection 100 according to the first embodiment, it is also possible to combine the modification 3 and the modification 4. That is, in the pin 10, the undercoating 15 may be formed of the chemical treatment coating 153, the alloy plating layer 151, and the chemical treatment coating 154. In the box 20, the undercoating 25 may be formed of the chemical treatment coating 253, the alloy plating layer 251, and the chemical treatment coating 254.

### SECOND EMBODIMENT

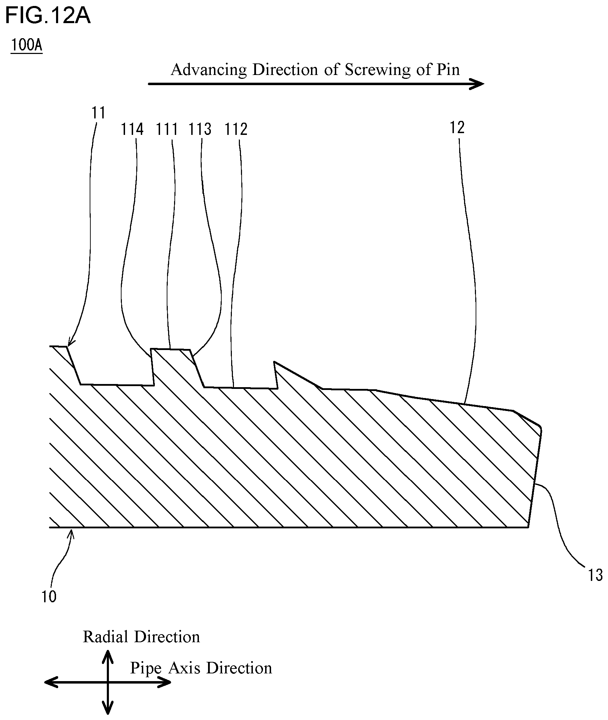

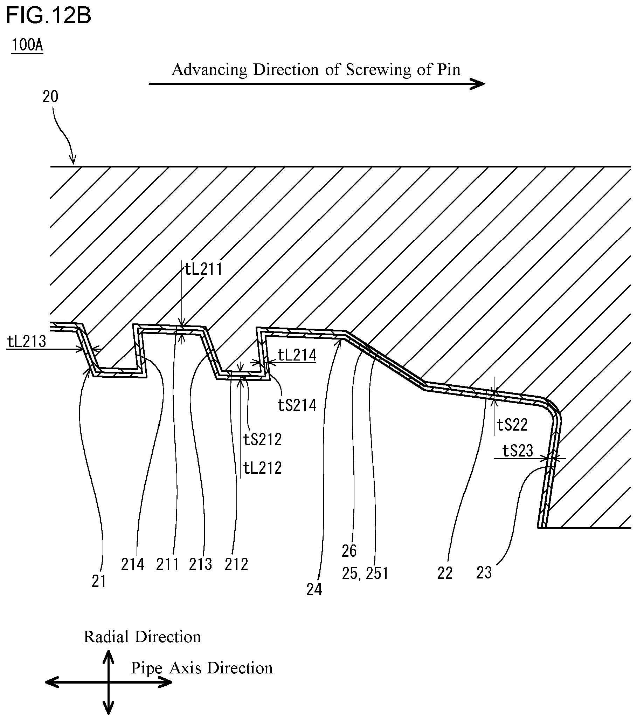

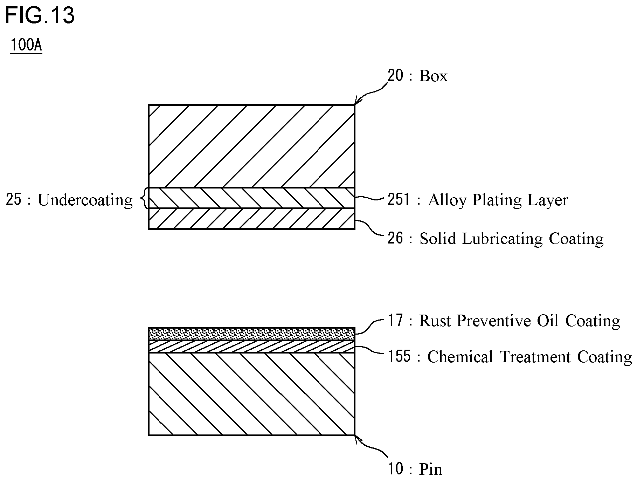

The configuration of a threaded connection 100A according to a second embodiment will be described with reference to FIG. 12A, FIG. 12B, and FIG. 13. FIG. 12A and FIG. 12B are longitudinal cross-sectional views showing a portion of a pin 10 or a box 20 of the threaded connection 100A in an individual state. FIG. 12A shows the pin 10. FIG. 12B shows the box 20. FIG. 13 is a schematic view showing the near-surface portions of the pin 10 and the box 20 of the threaded connection 100A in the individual state. The threaded connection 100A differs from the threaded connection 100 according to the first embodiment in that the pin 10 includes neither an undercoating nor a solid lubricating coating. That is, in the threaded connection 100A, an undercoating 25 and a solid lubricating coating 26 (a laminated coating 24) are provided to only the surface of the box 20.

Referring to FIG. 12A and FIG. 12B, in the threaded connection 100A, in the individual state, the box 20 includes the undercoating 25 and the solid lubricating coating 26, but the pin 10 includes neither the undercoating nor the solid lubricating coating. In the threaded connection 100A, in the same manner as the threaded connection 100, a coating thickness tS214 of the solid lubricating coating 26 on a female thread load flank 214 is smaller than a coating thickness tS212 of the solid lubricating coating 26 on a female thread crest 212. Further, a coating thickness tS22 of the solid lubricating coating 26 on a box sealing surface 22 is larger than the coating thickness tS214 of the solid lubricating coating 26 on the female thread load flank 214.

In this case, of the female thread load flank 214, the female thread crest 212, and the box sealing surface 22, the female thread load flank 214 (the coating thickness tS214) has the smallest coating thickness of the solid lubricating coating 26, and each of the female thread crest 212 (the coating thickness tS212) and the box sealing surface 22 (the coating thickness tS22) has a larger coating thickness of the solid lubricating coating 26 than the female thread load flank 214 (the coating thickness tS214). Therefore, the solid lubricating coating 26 has a relatively large coating thickness on contact surfaces in the radial direction that are related to shouldering torque (the female thread crest 212, the box sealing surface 22), but the solid lubricating coating 26 has a relatively small coating thickness on a contact surface in the pipe axis direction that is related to apparent yield torque (the female thread load flank 214). Accordingly, according to the threaded connection 100A according to the second embodiment, in the same manner as the threaded connection 100 according to the first embodiment, it is possible to expand the torque window with a simple and inexpensive configuration.

In the threaded connection 100A, the laminated coating 24 is provided to only the surface of the box 20 and hence, a second coating thickness (the coating thickness of a laminated coating on a male thread crest 111) and a fourth coating thickness (the coating thickness of the laminated coating on a male thread root 112) are zero. Therefore, a first index is expressed by the value obtained by subtracting a third coating thickness tL212 (the coating thickness of the laminated coating 24 on the female thread crest 212) from a first coating thickness tL211 (the coating thickness of the laminated coating 24 on a female thread root 211). In the same manner as the threaded connection 100, a second index is expressed by a distance d2 between the male thread crest 111 and the female thread root 211 in a made up state in the case that assumes that the box 20 includes no laminated coating 24 and the pin 10 includes no laminated coating 14 (see FIG. 8). The first index is smaller than the second index.

The first index is smaller than the second index and hence, in performing a making up operation, a situation does not occur in which the surface of the solid lubricating coating 26 comes into contact with the surface of the counterpart, between the male thread crest 111 and the female thread root 211. Accordingly, according to the threaded connection 100A according to the second embodiment, in the same manner as the threaded connection 100 according to the first embodiment, it is possible to prevent a making up trouble in advance and, particularly, it is possible to prevent narrowing of the torque window by causing the shouldering torque to stabilize at a low position.

In the threaded connection 100A, in the same manner as the threaded connection 100, a coating thickness tS23 of the solid lubricating coating 26 on a box shoulder surface 23 is smaller than the coating thickness tS212 of the solid lubricating coating 26 on the female thread crest 212. Further, the coating thickness tS23 of the solid lubricating coating 26 on the box shoulder surface 23 is smaller than the coating thickness tS22 of the solid lubricating coating 26 on the box sealing surface 22. In this case, in the box 20, each of the female thread crest 212 and the box sealing surface 22 has a larger coating thickness of the solid lubricating coating 26 than the female thread load flank 214 in the same manner as the threaded connection 100. In addition to the above, the box shoulder surface 23 has a smaller coating thickness of the solid lubricating coating 26 than the female thread crest 212. Further, the box shoulder surface 23 has a smaller coating thickness of the solid lubricating coating 26 than the box sealing surface 22.

Therefore, the solid lubricating coating 26 has a relatively small coating thickness on contact surfaces in the pipe axis direction that are related to apparent yield torque (the female thread load flank 214, the box shoulder surface 23). Accordingly, according to the threaded connection 100A according to the second embodiment, a high yield torque appears in the torque chart in the same manner as the threaded connection 100 according to the first embodiment.

In the threaded connection 100A, the laminated coating 24 is provided to only the surface of the box 20 and hence, a sixth coating thickness (the coating thickness of the laminated coating on a male thread load flank 114) and an eighth coating thickness (the coating thickness of the laminated coating on a male thread stabbing flank 113) are zero. Therefore, a third index is expressed by the total value of a fifth coating thickness tL214 (the coating thickness of the laminated coating 24 on the female thread load flank 214) and a seventh coating thickness tL213 (the coating thickness of the laminated coating 24 on a female thread stabbing flank 213). A fourth index is expressed by a distance d4 between the male thread stabbing flank 113 and the female thread stabbing flank 213 in the made up state in the case that assumes that the box 20 includes no laminated coating 24 and the pin 10 includes no laminated coating 14 (see FIG. 8). The third index is smaller than the fourth index.

The third index is smaller than the fourth index and hence, there is no possibility that contact sliding occurs both between the load flanks 114, 214 and between the stabbing flanks 113, 213 at the stage in which the male thread root 112 and the female thread crest 212 slide along each other while coming into interference contact. Accordingly, according to the threaded connection 100A according to the second embodiment, in the same manner as the threaded connection 100 according to the first embodiment, a rise in torque resistance can be suppressed, thus suppressing a rise in shouldering torque and, as a result, it is possible to prevent narrowing of the torque window.

Referring to FIG. 13, in the threaded connection 100A, in the individual state, the surface of the pin 10 is covered by neither the undercoating nor the solid lubricating coating. Instead, the surface of the pin 10 is covered by a chemical treatment coating 155, and the surface covered by the chemical treatment coating 155 is covered by a rust preventive oil coating 17. That is, the base metal surface of the pin 10 is covered by the chemical treatment coating 155, and the rust preventive oil coating 17 is formed on the chemical treatment coating 155.

The chemical treatment coating 155 is formed by performing chemical treatment with zinc phosphate or manganese phosphate, for example, on the base metal surface of the pin 10 in the same manner as the treatment performed to form the chemical treatment coating 153 described in the above-mentioned modification 3. The rust preventive oil coating 17 is formed by applying a rust preventive oil to the entire surface of the pin 10 on which the chemical treatment coating 155 is formed. Examples of a method for applying a rust preventive oil include spraying, brushing, and immersion into a rust preventive oil tank.

The chemical treatment coating 155 and the rust preventive oil coating 17 are laminated on the surface of the pin 10 in this order as described above. Consequently, rust-proof treatment is sufficiently applied to the pin 10 at a low cost. Therefore, it is possible to prevent generation of rust on the pin 10 during a storage period from production of the pin 10 to the point in time at which the pin 10 is made up to the box 20.

However, in the pin 10, such a surface treatment coating is not always necessary. For example, only the chemical treatment coating 155 may be formed on the base metal surface of the pin 10, or only the rust preventive oil coating 17 may be formed on the base metal surface of the pin 10. The base metal surface of the pin 10 may be exposed.

As described in the first embodiment, in the case in which the solid lubricating coating 26 is provided to the box 20, it is possible to easily form the solid lubricating coating 26 having appropriate coating thicknesses in required regions compared with the case in which the solid lubricating coating 16 is provided to the pin 10. However, in the threaded connection 100A, the box 20 is the only target to which the solid lubricating coating 26 is provided. Accordingly, the threaded connection 100A according to the second embodiment is useful in that the threaded connection 100A can be easily produced.

In the threaded connection 100A according to the second embodiment, the configuration described in the above-mentioned modifications 1 to 4 may be applied to the box 20 to which the laminated coating 24 (the undercoating 25 and the solid lubricating coating 26) is provided.

### THIRD EMBODIMENT

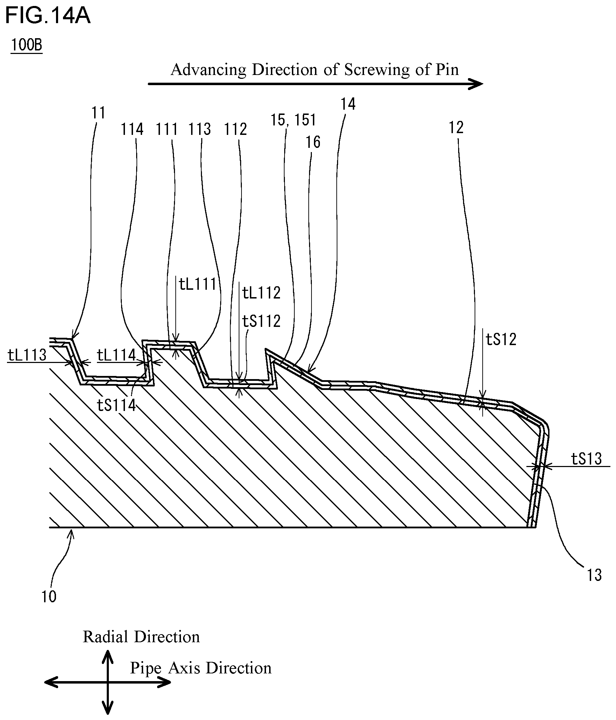

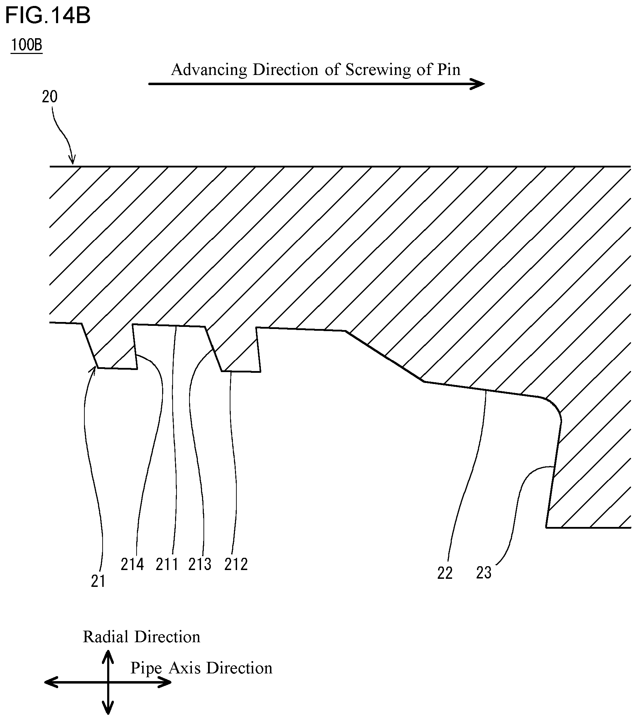

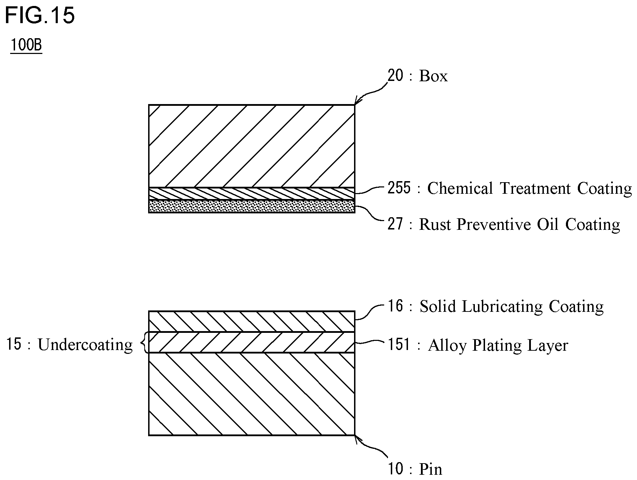

The configuration of a threaded connection 100B according to a third embodiment will be described with reference to FIG. 14A, FIG. 14B, and FIG. 15. FIG. 14A and FIG. 14B are longitudinal cross-sectional views showing a portion of a pin 10 or a box 20 of the threaded connection 100B in an individual state. FIG. 14A shows the pin 10. FIG. 14B shows the box 20. FIG. 15 is a schematic view showing the near-surface portions of the pin 10 and the box 20 of the threaded connection 100B in the individual state. The threaded connection 100B differs from the threaded connection 100 according to the first embodiment in that the box 20 includes neither an undercoating nor a solid lubricating coating. That is, in the threaded connection 100B, an undercoating 15 and a solid lubricating coating 16 (a laminated coating 14) is provided to only the surface of the pin 10.

Referring to FIG. 14A and FIG. 14B, in the threaded connection 100B, in the individual state, the pin 10 includes the undercoating 15 and the solid lubricating coating 16, but the box 20 includes neither the undercoating nor the solid lubricating coating. In the threaded connection 100B, in the same manner as the threaded connection 100, a coating thickness tS114 of the solid lubricating coating 16 on a male thread load flank 114 is smaller than a coating thickness tS112 of the solid lubricating coating 16 on a male thread root 112. Further, a coating thickness tS12 of the solid lubricating coating 16 on a pin sealing surface 12 is larger than the coating thickness tS114 of the solid lubricating coating 16 on the male thread load flank 114.

In this case, of the male thread load flank 114, the male thread root 112, and the pin sealing surface 12, the male thread load flank 114 (the coating thickness tS114) has the smallest coating thickness of the solid lubricating coating 16, and each of the male thread root 112 (the coating thickness tS112) and the pin sealing surface 12 (the coating thickness tS12) has a larger coating thickness of the solid lubricating coating 16 than the male thread load flank 114 (the coating thickness tS114). Therefore, the solid lubricating coating 16 has a relatively large coating thickness on contact surfaces in the radial direction that are related to shouldering torque (the male thread root 112, the pin sealing surface 12), but the solid lubricating coating 16 has a relatively small coating thickness on a contact surface in the pipe axis direction that is related to apparent yield torque (the male thread load flank 114). Accordingly, according to the threaded connection 100B according to the third embodiment, in the same manner as the threaded connection 100 according to the first embodiment, it is possible to expand the torque window with a simple and inexpensive configuration.

In the threaded connection 100B, the laminated coating 14 is provided to only the surface of the pin 10 and hence, a first coating thickness (the coating thickness of a laminated coating on a female thread root 211) and a third coating thickness (the coating thickness of the laminated coating on a female thread crest 212) are zero. Therefore, a first index is expressed by the value obtained by subtracting a fourth coating thickness tL112 (the coating thickness of the laminated coating 14 on the male thread root 112) from a second coating thickness tL111 (the coating thickness of the laminated coating 14 on a male thread crest 111). In the same manner as the threaded connection 100, a second index is expressed by a distance d2 between the male thread crest 111 and the female thread root 211 in a made up state in the case that assumes that the box 20 includes no laminated coating 24 and the pin 10 includes no laminated coating 14 (see FIG. 8). The first index is smaller than the second index.

The first index is smaller than the second index and hence, in performing a making up operation, a situation does not occur in which the surface of the solid lubricating coating 16 comes into contact with the surface of the counterpart, between the male thread crest 111 and the female thread root 211. Accordingly, according to the threaded connection 100B according to the third embodiment, in the same manner as the threaded connection 100 according to the first embodiment, it is possible to prevent a making up trouble in advance and, particularly, it is possible to prevent narrowing of the torque window by causing the shouldering torque to stabilize at a low position.

In the threaded connection 100B, in the same manner as the threaded connection 100, a coating thickness tS13 of the solid lubricating coating 16 on a pin shoulder surface 13 is smaller than the coating thickness tS112 of the solid lubricating coating 16 on the male thread root 112. Further, the coating thickness tS13 of the solid lubricating coating 16 on the pin shoulder surface 13 is smaller than the coating thickness tS12 of the solid lubricating coating 16 on the pin sealing surface 12. In this case, in the pin 10, each of the male thread root 112 and the pin sealing surface 12 has a larger coating thickness of the solid lubricating coating 16 than the male thread load flank 114 in the same manner as the threaded connection 100. In addition to the above, the pin shoulder surface 13 has a smaller coating thickness of the solid lubricating coating 16 than the male thread root 112. Further, the pin shoulder surface 13 has a smaller coating thickness of the solid lubricating coating 16 than the pin sealing surface 12.

Therefore, the solid lubricating coating 16 has a relatively small coating thickness on contact surfaces in the pipe axis direction that are related to apparent yield torque (the male thread load flank 114, the pin shoulder surface 13). Accordingly, according to the threaded connection 100B according to the third embodiment, a high yield torque appears in the torque chart in the same manner as the threaded connection 100 according to the first embodiment.

In the threaded connection 100B, the laminated coating 14 is provided to only the surface of the pin 10 and hence, a fifth coating thickness (the coating thickness of the laminated coating on a female thread load flank 214) and a seventh coating thickness (the coating thickness of the laminated coating on a female thread stabbing flank 213) are zero. Therefore, a third index is expressed by the total value of a sixth coating thickness tL114 (the coating thickness of the laminated coating 14 on the male thread load flank 114) and an eighth coating thickness tL113 (the coating thickness of the laminated coating 14 on a male thread stabbing flank 113). A fourth index is expressed by a distance d4 between the male thread stabbing flank 113 and the female thread stabbing flank 213 in the made up state in the case that assumes that the box 20 includes no laminated coating 24 and the pin 10 includes no laminated coating 14 (see FIG. 8). The third index is smaller than the fourth index.

The third index is smaller than the fourth index and hence, there is no possibility that contact sliding occurs both between the load flanks 114, 214 and between the stabbing flanks 113, 213 at the stage in which the male thread root 112 and the female thread crest 212 slide along each other while coming into interference contact. Accordingly, according to the threaded connection 100B according to the third embodiment, in the same manner as the threaded connection 100 according to the first embodiment, a rise in torque resistance can be suppressed, thus suppressing a rise in shouldering torque and, as a result, it is possible to prevent narrowing of the torque window.

Referring to FIG. 15, in the threaded connection 100B, in the individual state, the surface of the box 20 is covered by neither the undercoating nor the solid lubricating coating. Instead, the surface of the box 20 is covered by a chemical treatment coating 255, and the surface covered by the chemical treatment coating 255 is covered by a rust preventive oil coating 27. That is, the base metal surface of the box 20 is covered by the chemical treatment coating 255, and the rust preventive oil coating 27 is formed on the chemical treatment coating 255.

The chemical treatment coating 255 is formed by performing chemical treatment with zinc phosphate or manganese phosphate, for example, on the base metal surface of the box 20 in the same manner as the treatment performed to form the chemical treatment coating 253 described in the above-mentioned modification 3. The rust preventive oil coating 27 is formed by applying a rust preventive oil to the entire surface of the box 20 on which the chemical treatment coating 255 is formed. Examples of a method for applying a rust preventive oil includes spraying, brushing, and immersion into a rust preventive oil tank.

The chemical treatment coating 255 and the rust preventive oil coating 27 are laminated on the surface of the box 20 in this order as described above. Consequently, rust-proof treatment is sufficiently applied to the box 20 at a low cost. Therefore, it is possible to prevent generation of rust on the box 20 during a storage period from production of the box 20 to the point in time at which the box 20 is made up to the pin 10.

However, in the box 20, such a surface treatment coating is not always necessary. For example, only the chemical treatment coating 255 may be formed on the base metal surface of the box 20, or only the rust preventive oil coating 27 may be formed on the base metal surface of the box 20. The base metal surface of the box 20 may be exposed.

In the threaded connection 100B according to the third embodiment, the configuration described in the above-mentioned modifications 1 to 4 may be applied to the pin 10 to which the laminated coating 14 (the undercoating 15 and the solid lubricating coating 16) is provided.

### FOURTH EMBODIMENT

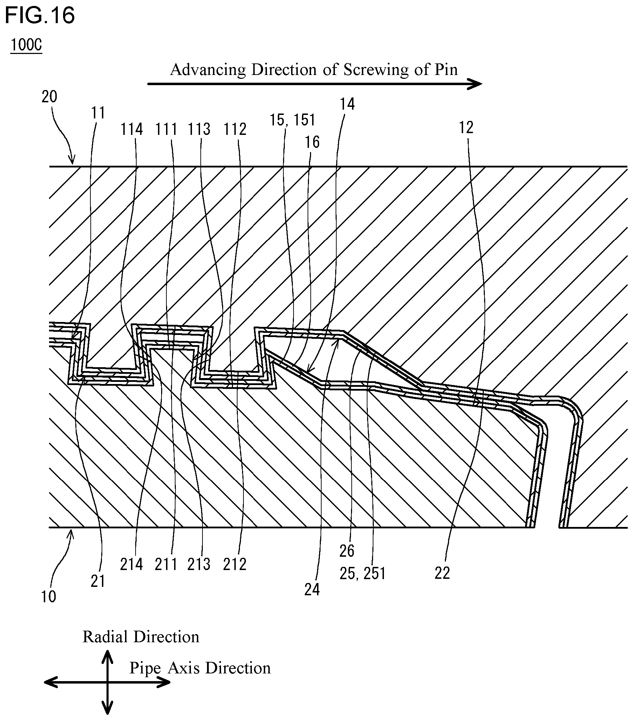

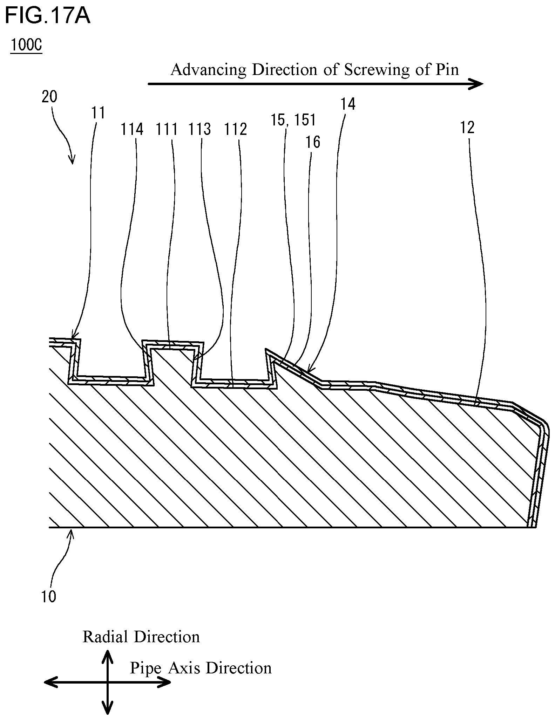

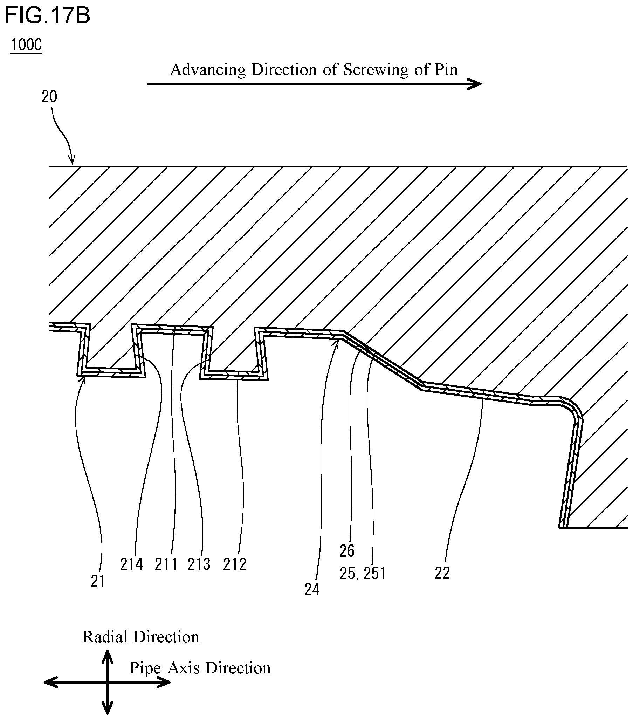

The configuration of a threaded connection 100C according to a fourth embodiment will be described with reference to FIG. 16, FIG. 17A, and FIG. 17B. FIG. 16 is a longitudinal cross-sectional view showing a portion of the threaded connection 100C in a made up state. FIG. 17A and FIG. 17B are longitudinal cross-sectional views showing a pin 10 or a box 20 of the threaded connection shown in FIG. 16 in an individual state. FIG. 17A shows the pin 10. FIG. 17B shows the box 20. The threaded connection 100C differs from the threaded connection 100 according to the first embodiment in having a self-locking mechanism. The threaded connection 100C need not include a pin shoulder surface and a box shoulder surface.

In the threaded connection 100C, a male thread part 11 of the pin 10 forms a self-locking mechanism in coordination with a female thread part 21 of the box 20. Specifically, in the male thread part 11, the width of a male thread ridge, which is defined by a male thread crest 111, a male thread stabbing flank 113, and a male thread load flank 114, reduces progressively along the thread helix towards the front end side of the pin 10. In the male thread part 11, the width of a male thread groove, which is defined by a male thread root 112, the male thread stabbing flank 113, and the male thread load flank 114, increases progressively along the thread helix towards the front end side of the pin 10. That is, the kind of thread forming the male thread part 11 is a wedge thread.

When the threaded connection 100C is viewed in a longitudinal cross-sectional view, the male thread stabbing flank 113 is a straight line that is inclined such that the outer circumferential edge of the male thread stabbing flank 113 is located at a position closer to the front end side of the pin 10 than the inner circumferential edge of the male thread stabbing flank 113. When the threaded connection 100C is viewed in a longitudinal cross-sectional view, the male thread load flank 114 is a straight line that is inclined such that the outer circumferential edge of the male thread load flank 114 is located at a position closer to the steel pipe body 31 than the inner circumferential edge of the male thread load flank 114.

In the female thread part 21, the width of a female thread groove, which is defined by a female thread root 211, a female thread stabbing flank 213, and a female thread load flank 214, reduces progressively along the thread helix towards the inner depth side of the box 20 as corresponding to the width of the male thread ridge. In the female thread part 21, the width of a female thread ridge, which is defined by a female thread crest 212, the female thread stabbing flank 213, and the female thread load flank 214, increases progressively along the thread helix towards the inner depth side of the box 20 as corresponding to the width of the male thread groove. That is, to allow the female thread part 21 to correspond to the male thread part 11, the kind of thread forming the female thread part 21 is a wedge thread.

When the threaded connection 100C is viewed in a longitudinal cross-sectional view, the female thread stabbing flank 213 is a straight line that is inclined such that the outer circumferential edge of the female thread stabbing flank 213 is located at a position closer to the inner depth side of the box 20 than the inner circumferential edge of the female thread stabbing flank 213. When the threaded connection 100C is viewed in a longitudinal cross-sectional view, the female thread load flank 214 is a straight line that is inclined such that the outer circumferential edge of the female thread load flank 214 is located at a position closer to the pipe end of the box 20 than the inner circumferential edge of the female thread load flank 214.

During making up, due to screwing of the pin 10 into the box 20, the male thread load flank 114 comes into contact with the female thread load flank 214, and the male thread stabbing flank 113 comes into contact with the female thread stabbing flank 213. The point in time of such contact is self-locking. Self-locking corresponds to shouldering of the threaded connection 100 according to the first embodiment. In a state in which making up is completed with further advancing of screwing, the load flanks 114, 214 come into pressure contact with each other, and the stabbing flanks 113, 213 come into pressure contact with each other. In this made up state, the laminated coatings 14, 24 are interposed between the male thread load flank 114 and the female thread load flank 214 that come into pressure contact with each other. The laminated coatings 14, 24 are also interposed between the male thread stabbing flank 113 and the female thread stabbing flank 213 that come into pressure contact with each other.

The threaded connection 100C according to the fourth embodiment can obtain advantageous effects substantially equal to the advantageous effects of the first embodiment. In the fourth embodiment, in the made up state in the case that assumes that the box 20 includes no laminated coating 24 and the pin 10 includes no laminated coating 14, the stabbing flanks 113, 213 come into pressure contact with each other. Therefore, the fourth index described in the first embodiment is zero. Accordingly, in the fourth embodiment, the condition in the first embodiment that the third index is smaller than the fourth index is eliminated.

The configuration of the fourth embodiment may be applied to the threaded connection 100A according to the second embodiment or to the threaded connection 100B according to the third embodiment.

The embodiments of the present disclosure have been described heretofore. However, the above-described embodiments merely form examples for executing the present disclosure. Accordingly, the present disclosure is not limited to the above-described embodiments, and the above-described embodiments may be suitably modified without departing from the gist of the present disclosure.

In the pin 10, the position at which the pin sealing surface 12 is provided is not limited to a position between the male thread part 11 and the pin shoulder surface 13. For example, the pin sealing surface 12 may be provided in the middle of the male thread part 11 in the pipe axis direction, or may be provided at a position closer to the steel pipe body 31 side than the male thread part 11.

In the box 20, it is sufficient that the position at which the box sealing surface 22 is provided correspond to the position at which the pin sealing surface 12 is provided, and the position at which the box sealing surface 22 is provided is not limited to a position between the female thread part 21 and the box shoulder surface 23. For example, the box sealing surface 22 may be provided in the middle of the female thread part 21 in the pipe axis direction, or may be provided at a position closer to the pipe end side of the box 20 than the female thread part 21.

In the case in which the pin shoulder surface 13 is provided to the pin 10, the position of the pin shoulder surface 13 is not limited to the front end of the pin 10. For example, the pin shoulder surface 13 may be provided in the middle of the male thread part 11 in the pipe axis direction, or may be provided at a position closer to the steel pipe body 31 side than the male thread part 11.

In the case in which the box shoulder surface 23 is provided to the box 20, it is sufficient that the position of the box shoulder surface 23 correspond to the position of the pin shoulder surface 13, and the position of the box shoulder surface 23 is not limited to the inner depth portion of the box 20. For example, the box shoulder surface 23 may be provided in the middle of the female thread part 21 in the pipe axis direction, or may be provided to the pipe end of the box 20.

The threaded connection 100, 100A, 100B, 100C may be of an integral type. The most preferable threaded connection is the threaded connection 100A of a coupling type in which the solid lubricating coating 26 is provided to only the surface of the box 20. The reason is that the coupling 40 is a part having a pipe shape and a significantly small length compared with the steel pipe 30, and thus can be easily handled for various treatments.

### REFERENCE SIGNS LIST

100, 100A, 100B, 100C: threaded connection
10: pin
11: male thread part
111: male thread crest
112: male thread root
113: male thread stabbing flank
114: male thread load flank
12: pin sealing surface
13: pin shoulder surface
14: laminated coating
15: undercoating
151: alloy plating layer
16: solid lubricating coating
20: box
21: female thread part
211: female thread root
212: female thread crest
213: female thread stabbing flank
214: female thread load flank
22: box sealing surface
23: box shoulder surface
24: laminated coating
25: undercoating
251: alloy plating layer
26: solid lubricating coating
tS112: coating thickness
tS114: coating thickness
tS12: coating thickness
tS13: coating thickness
tS212: coating thickness
tS214: coating thickness
tS22: coating thickness
tS23: coating thickness
tL111: second coating thickness
tL112: fourth coating thickness
tL113: eighth coating thickness
tL114: sixth coating thickness
tL211: first coating thickness
tL212: third coating thickness
tL213: seventh coating thickness
tL214: fifth coating thickness
d2: distance (second index)
d4: distance (fourth index)
X: pipe axis
30: steel pipe
31: body
40: coupling

## Claims

1. A threaded connection that connects steel pipes with each other, the threaded connection comprising:
a pin having a pipe shape and provided continuously to a steel pipe body; and
a box having a pipe shape and made up to the pin with insertion of the pin into the box, wherein
the pin includes a male thread part and a pin sealing surface, the male thread part being provided to an outer peripheral surface of the pin, the pin sealing surface being provided to the outer peripheral surface,
the box includes a female thread part and a box sealing surface, the female thread part being provided to an inner peripheral surface of the box in such a way as to correspond to the male thread part, and being engaged with the male thread part in a made up state in which the pin and the box are made up to each other, the box sealing surface being provided to the inner peripheral surface in such a way as to correspond to the pin sealing surface,
the male thread part includes a male thread crest, a male thread root, a male thread stabbing flank, and a male thread load flank,
the female thread part includes a female thread root, a female thread crest, a female thread stabbing flank, and a female thread load flank, the female thread root corresponding to the male thread crest, the female thread crest corresponding to the male thread root, the female thread stabbing flank corresponding to the male thread stabbing flank, the female thread load flank corresponding to the male thread load flank,
in an individual state before the pin and the box are made up to each other, a surface of at least one of the box and the pin is covered by an undercoating, and the surface covered by the undercoating is covered by a solid lubricating coating in a single form,
the undercoating includes an alloy plating layer, and the solid lubricating coating is formed on the alloy plating layer,
in the made up state, the pin sealing surface comes into interference contact with the box sealing surface, the male thread root comes into interference contact with the female thread crest, and the male thread load flank comes into pressure contact with the female thread load flank, and
the threaded connection in the individual state has a following configuration:
a coating thickness of the solid lubricating coating on the female thread load flank in a pipe axis direction of the threaded connection is smaller than a coating thickness of the solid lubricating coating on the female thread crest in a radial direction perpendicular to the pipe axis direction,
a coating thickness of the solid lubricating coating on the box sealing surface in the radial direction is larger than the coating thickness of the solid lubricating coating on the female thread load flank,
a coating thickness of the solid lubricating coating on the male thread load flank in the pipe axis direction is smaller than a coating thickness of the solid lubricating coating on the male thread root in the radial direction,
a coating thickness of the solid lubricating coating on the pin sealing surface in the radial direction is larger than the coating thickness of the solid lubricating coating on the male thread load flank, and
regarding a first coating thickness that is a total coating thickness of the solid lubricating coating and the undercoating on the female thread root, a second coating thickness that is a total coating thickness of the solid lubricating coating and the undercoating on the male thread crest, a third coating thickness that is a total coating thickness of the solid lubricating coating and the undercoating on the female thread crest, and a fourth coating thickness that is a total coating thickness of the solid lubricating coating and the undercoating on the male thread root, a first index is smaller than a second index, the first index being expressed by a value obtained by subtracting a sum total of the third coating thickness and the fourth coating thickness from a sum total of the first coating thickness and the second coating thickness, the second index being expressed by a distance between the male thread crest and the female thread root in the made up state in a case that assumes that each of the box and the pin includes neither the undercoating nor the solid lubricating coating.

2. The threaded connection according to claim 1, wherein
the undercoating further includes a passivation treatment film, and the passivation treatment film is formed between the alloy plating layer and the solid lubricating coating.

3. The threaded connection according to claim 1, wherein
unevenness is formed on the surface, on which the undercoating is formed, by performing blasting process.

4. The threaded connection according to claim 1, wherein
the pin further includes a pin shoulder surface provided at a front end of the pin,
the box further includes a box shoulder surface provided at an inner depth portion of the box in such a way as to correspond to the pin shoulder surface,
in the made up state, the pin shoulder surface comes into pressure contact with the box shoulder surface, and
the threaded connection in the individual state has a following configuration:
a coating thickness of the solid lubricating coating on the box shoulder surface in the pipe axis direction is smaller than the coating thickness of the solid lubricating coating on the female thread crest, and
a coating thickness of the solid lubricating coating on the pin shoulder surface in the pipe axis direction is smaller than the coating thickness of the solid lubricating coating on the male thread root.

5. The threaded connection according to claim 4, wherein
the threaded connection in the individual state has a following configuration:
the coating thickness of the solid lubricating coating on the box shoulder surface is smaller than the coating thickness of the solid lubricating coating on the box sealing surface, and
the coating thickness of the solid lubricating coating on the pin shoulder surface is smaller than the coating thickness of the solid lubricating coating on the pin sealing surface.

6. The threaded connection according to claim 4, wherein
regarding a fifth coating thickness that is a total coating thickness of the solid lubricating coating and the undercoating on the female thread load flank, a sixth coating thickness that is a total coating thickness of the solid lubricating coating and the undercoating on the male thread load flank, a seventh coating thickness that is a total coating thickness of the solid lubricating coating and the undercoating on the female thread stabbing flank, and an eighth coating thickness that is a total coating thickness of the solid lubricating coating and the undercoating on the male thread stabbing flank, a third index is smaller than a fourth index, the third index being expressed by a total value of the fifth coating thickness, the sixth coating thickness, the seventh coating thickness, and the eighth coating thickness, the fourth index being expressed by a distance between the male thread stabbing flank and the female thread stabbing flank in the made up state in the case that assumes that each of the box and the pin includes neither the undercoating nor the solid lubricating coating.

7. The threaded connection according to claim 1, wherein
the pin is provided to each of the steel pipes that are to be connected with each other, and
the box is provided to a coupling that is a part having a pipe shape separately from the steel pipes.

8. The threaded connection according to claim 1, wherein
the solid lubricating coating contains a resin and a solid lubricating powder.

9. The threaded connection according to claim 8, wherein
the resin is an epoxy resin, and the solid lubricating powder is polytetrafluoroethylene.

10. The threaded connection according to claim 1, wherein
in the individual state, the box includes the undercoating and the solid lubricating coating, and the pin includes neither the undercoating nor the solid lubricating coating.

11. The threaded connection according to claim 10, wherein
the pin further includes a pin shoulder surface provided at a front end of the pin,
the box further includes a box shoulder surface provided at an inner depth portion of the box in such a way as to correspond to the pin shoulder surface,
in the made up state, the pin shoulder surface comes into pressure contact with the box shoulder surface,
the pin is provided to each of the steel pipes that are to be connected with each other,
the box is provided to a coupling that is a part having a pipe shape separately from the steel pipes,
the solid lubricating coating contains an epoxy resin and a solid lubricating powder made from polytetrafluoroethylene,
the undercoating includes a Zn alloy plating layer as the alloy plating layer and includes a passivation treatment film, and the passivation treatment film is formed between the Zn alloy plating layer and the solid lubricating coating,
unevenness is formed on the surface of the box, on which the undercoating is formed, by performing blasting process, and
in the individual state, a coating thickness of the solid lubricating coating on the box shoulder surface in the pipe axis direction is smaller than the coating thickness of the solid lubricating coating on the female thread crest.

12. The threaded connection according to claim 11, wherein
in the individual state, the coating thickness of the solid lubricating coating on the box shoulder surface is smaller than the coating thickness of the solid lubricating coating on the box sealing surface.

13. The threaded connection according to claim 11, wherein
regarding a fifth coating thickness that is a total coating thickness of the solid lubricating coating and the undercoating on the female thread load flank and a seventh coating thickness that is a total coating thickness of the solid lubricating coating and the undercoating on the female thread stabbing flank, a third index is smaller than a fourth index, the third index being expressed by a total value of the fifth coating thickness and the seventh coating thickness, the fourth index being expressed by a distance between the male thread stabbing flank and the female thread stabbing flank in the made up state in the case that assumes that each of the box and the pin includes neither the undercoating nor the solid lubricating coating.

14. The threaded connection according to any one of claims 10 to 13, wherein
in the individual state, a surface of the pin is covered by a chemical treatment coating, and the surface covered by the chemical treatment coating is covered by a rust preventive oil coating.
